# EUROPEAN PATENT APPLICATION

(11) **EP 1 544 862 A2**
(43) Date of publication of application: **22.06.2005**
(21) Application number: 04029799.6
(22) Date of filing: 15.12.2004
(51) Int. Cl.: G11B 31/00, G11B 33/02, G11B 17/04, G11B 25/04

(54) **Image pickup apparatus**

(30) Priority: 17.12.2003 JP 2003419804; 22.12.2003 JP 2003425363; 24.12.2003 JP 2003427860
(71) Applicant: SONY CORPORATION, Tokyo (JP)
(72) Inventor: Isawa, Hidetoshi, Shinagawa-ku, Tokyo (JP); Arai, Shizuo, Shinagawa-ku, Tokyo (JP); Tsuchiya, Tsutomu, Shinagawa-ku, Tokyo (JP); Tsutsumi, Yuka, Shinagawa-ku, Tokyo (JP)
(74) Representative: Müller - Hoffmann & Partner

(57) **Abstract**

In a small size image pickup apparatus, depending upon the opening direction of the lid, a hand strap and the like become obstacles and it becomes difficult to open a disc lid with a large angle. Hence, a disc-like recording medium cannot be attached to and detached from the disc type image pickup apparatus without difficulty.

In a disc type image pickup apparatus comprises a table rotating apparatus 35 for rotating a turntable 36 on which a DVD 2 is detachably loaded in the erected state, an optical pickup apparatus 71 capable of recording an information signal of an image corresponding to light of an object inputted through at least a lens apparatus 4 on the DVD 2 rotated by the table rotating apparatus 35, an outer case 5 having a disc compartment portion 6 in which the table rotating apparatus 35 and the optical pickup apparatus 71 are accommodated and in which the turntable 36 being opened to the side surface thereof and a disc lid 7 attached to the outer case 5 so as become freely openable and closable to cover the disc compartment portion 6. A lid rotary shaft portion 39 is provided on the rear portion of the side surface of the outer case 5 to rotatably support the disc lid 7 and the disc lid 7 can be rotated around the lid rotary shaft portion 39 in the lateral direction.

## Description

### BACKGROUND OF THE INVENTION

### Field of the Invention:

The present invention relates to an image pickup apparatus capable of recording and/or reproducing an information signal on and/or from a disc-like recording medium detachably attached to the image pickup apparatus, and particularly to an image pickup apparatus in which a disc lid attached to an outer case can be opened to the front so that the disc lid can be opened in the lateral direction.

Also, the present invention relates to an image pickup apparatus in which a lid opening and closing mechanism of a disc lid is disposed near the vacant area near a disc drive apparatus within an outer case so that the apparatus can be made small in size and decreased in thickness.

Further, the present invention relates to an image pickup apparatus in which a risk that an accessory shoe provided on the upper portion of an outer case will be caught with something can be removed by removing or decreasing the projected amount of the accessory shoe on the upper surface and an image pickup apparatus which can be miniaturized.

### Description of the Related Art:

So far cited patent reference 1 has described this kind of an image pickup apparatus, for example. The cited patent reference 1 relates to a video camera which is formed as one body with an optical disc deck, and particularly to a video camera having an optical disc in which the lens side is provided with a microphone or a flash portion and a monitor portion is provided on the side surface portion of the housing. The video camera having the optical disc described in the cited patent reference 1 includes an apparatus main body in which a camera portion is formed as one body with one side surface of a disc deck portion using an optical disc as a recording medium. In this video camera having the optical disc, a liquid-crystal monitor portion having a liquid-crystal display screen attached to the side surface of the camera portion is attached to the side surface of the camera portion so as to become openable and closable. The angular range in which the liquid-crystal monitor portion can be opened and closed relative to the side surface of the camera portion is selected to be larger than 90 degrees and it should be preferably selected to be larger than 120 degrees.

According to the video camera with the optical disc having the above-mentioned arrangement, when it is in use, this liquid-crystal display screen whose visible range is small becomes easy to see. Also, while the apparatus can be miniaturized by using the optical disc as the recording medium, the portion of the side surface of the camera portion that has not been used so far can be effectively used as the portion to locate therein an operation portion, which becomes available only when the liquid-crystal display screen is opened, and a speaker. In addition, since an angular extent in which the liquid-crystal monitor portion can be opened and closed is selected to be larger than 90 degrees, preferably, it should be selected to be larger than 120 degrees, there can expected the effects in which operability with which the user operates this operation portion while watching the liquid-crystal display screen can be improved.

Cited patent reference 2, for example, has described other conventional image pickup apparatus. The cited patent reference 2 has described an electronic still camera for recording image on a video floppy (VF) as an electric signal. The electronic still camera described in the cited patent reference 3 includes an openable and closable lid portion in which a housing incorporating therein a flat plate-like rotating body with magnetic medium for recording video information coated thereon is loaded and ejected. This electronic still camera is characterized in that the lid portion is provided with an operation member for operating the electronic still camera and that the operation member is comprised of only members that need not be used during the flat plate-like rotating body is being rotated.

According to the electronic still camera having the above-mentioned arrangement, operation buttons on the disc drive lid are composed of only operation buttons which need not be used during the disc drive is being rotated or such operation buttons need not be used. Thus, there can be expected the effect in which force that exerts a bad influence on the stable rotation of the VF disc of the disc drive can be prevented from acting on the VF so that video information can constantly be recorded and reproduced satisfactorily.

However, in the case of the image pickup apparatus according to the aforementioned cited patent reference 1, a cartridge insertion slot is formed on the end face of the rear side, the end face of the front side, the upper surface or the bottom surface of the disc deck portion in which a disc drive and a disc compartment portion are housed. Alternatively, the cartridge insertion slot is formed on a disc cover of the disc deck portion. Then, the tip end of the camera lens portion is projected in the forward from the front portion of the disc deck portion. Also, in the case of the image pickup apparatus according to the cited patent reference 2, an image pickup optical system and a signal processing system housed within the camera main body can be opened and closed by the disc drive lid. After the VF was inserted into the lid during the lid is being opened, when such lid is closed, the VF can be loaded into the disc drive apparatus.

Therefore, in the case of the image pickup apparatus according to these cited patent references 1 and 2, since the camera lens portion is larger than the disc deck portion, a problem arises, in which the whole of the image pickup apparatus is large in size. In particular, since the disc-like recording medium used as the recording medium is standardized in various factors such as size and thickness and it is united worldwide, even when the disc drive apparatus for rotating the disc-like recording medium is miniaturized, the size of the disc-like recording medium cannot be changed. Consequently, it is difficult to miniaturize the whole of the image pickup apparatus. On the other hand, it is relatively easy to miniaturize the lens apparatus.

Also, cited patent reference 3 has described so far this kind of image pickup apparatus, for example. The cited patent reference 3 has described a recording holding body exchange memory apparatus in a recording apparatus in which a recording holding body can be exchanged. The recording holding body exchange memory apparatus described in the cited patent reference 3 is a memory apparatus in which a recording holding body can be exchanged and it is composed of a switching means responsive to loading or eject operation of the recording holding body, an electronic memory means for electronically memorizing a signal from the switching means, a backup power supply capable of supplying electric power to the electronic memory means even when a main power supply is turned off and a display means for displaying the electric power state of the backup power supply.

According to the recording holding body exchange memory apparatus having the above-mentioned arrangement, since exchange of the recording holding body is memorized electronically, as compared with a mechanical memory mechanism, although it is simple in arrangement, it is high in reliability and it can be manufactured inexpensively. Also, there can be expected an effect in which a memorized signal can be canceled easily in a short period of time.

However, in the image pickup apparatus according to this cited patent reference 3, since a power apparatus such as a stepping motor is used as power of a lid opening and closing mechanism and such power apparatus is controlled by a microcomputer, it is unavoidable that the lid opening and closing mechanism becomes large in space. Further, since a lock member fixed to a disc lid and a slide member held to an outer case so as to become movable relative to this lock member and which is detachably engaged with this lock member are located on the same plane, the lid opening and closing mechanism becomes large in size in the stroke direction.

Also, cited patent reference 4 has described so far this kind of image pickup apparatus. The cited patent reference 4 has described an electronic viewfinder slide lock apparatus including a slide mechanism and a lock mechanism which are effective for shooting an image of an object with a camera. The electronic viewfinder slide lock apparatus described in the cited patent reference 4 is an apparatus for coupling an electronic viewfinder and a camera main body comprising a shoe provided on the electronic viewfinder, a fixed rail fixed to the camera main body and which has a groove into which the shoe can be slid, a brake plate inserted into a clearance between the fixed rail and the shoe and a fixed screw screwed into the fixed rail to push the brake plate with pressure.

According to the electronic viewfinder slide lock apparatus having the above-mentioned arrangement, since the brake plate is used as the engagement portion between the shoe and the fixed rail, anxiety in which the electronic viewfinder slide lock apparatus is shaken from a strength standpoint can be removed and disordered images generated by shake of the electronic viewfinder slide lock apparatus can be removed. Therefore, there can be expected effects in which the electronic viewfinder can be made strong and more clear images can be provided.
[Cited patent reference 1]: Official gazette of Japanese laid-open patent application No. 2001-111877
[Cited patent reference 2]: Official gazette of Japanese laid-open patent application No. 6-178179
[Cited patent reference 3]: Official gazette of Japanese laid-open patent application No. 63-140515
[Cited patent reference 4]: Official gazette of Japanese laid-open patent application No. 4-98978

The problem to be solved is that, since the disc-like recording medium is standardized in various factors such as size and thickness, even when the disc drive apparatus for rotating the disc-like recording medium is miniaturized, it is difficult to miniaturize the whole of the image pickup apparatus. Also, in an image pickup apparatus of a small size, a hand strap disturbs a disc lid from being opened wide depending on the direction in which the lid is opened. Thus, it is difficult to load and eject the disc-like recording medium on and from the small-size image pickup apparatus.

Also, while the disc lid attached to the outer case so as to become freely openable and closable is provided on the lid opening and closing mechanism because it should be kept closed during the disc-like recording medium mounted on the turntable located in the disc compartment portion is being rotated, the related-art lid opening and closing mechanism is large in space and hence it is difficult to make the whole of the image pickup apparatus become small in size and thin in thickness.

Further, when the upper portion of the accessory shoe is projected in the upper direction from the upper surface of the camera main body, the image pickup apparatus is made complicated by the protruded portion of the accessory shoe from a design standpoint and it is unavoidable that the protruded portion of the accessory shoe disturbs operations of the image pickup apparatus.

### SUMMARY OF THE INVENTION

In view of the aforesaid aspect, it is an object of the present invention to provide an image pickup apparatus in which a disc lid attached to an outer case is opened to the front so that the disc lid can be opened in the lateral direction.

It is other object of the present invention to provide an image pickup apparatus in which a lid opening and closing mechanism of a disc lid is located near a vacant area of a disc drive apparatus within an outer case so that the image pickup apparatus can be made small in size and thin in thickness.

It is a further object of the present invention to provide an image pickup apparatus in which an amount in which an accessory shoe provided on the upper portion of an outer case is projected onto the upper surface of the image pickup apparatus can be removed or decreased so that the image pickup apparatus can be prevented from being caught by something with the accessory shoe.

In the invention as claimed in claim 1, there is provided an image pickup apparatus which is comprised of a table rotating apparatus for rotating a turntable on which a disc-like recording medium is detachably attached while said disc-like recording medium is being erected, a pickup apparatus capable of recording an information signal of an image corresponding to light of an object inputted through at least a lens apparatus on the disc-like recording medium rotated by the table rotating apparatus, an outer case including a disc compartment portion for housing therein the table rotating apparatus and the pickup apparatus and in which the turntable is located, a disc lid attached to the outer case so as to become freely openable and closable to cover the disc compartment portion and a rotary shaft portion is provided on the rear portion of the side surface of the outer case to rotatably support the disc lid and the disc lid can be opened to the front so that the disc lid can be rotated around the rotary shaft portion in the lateral direction.

In the invention as claimed in claim 2, the disc lid has an outer periphery of which substantially 3/4 portion is circular and an axis line of the rotary shaft portion is extended in the upper and lower direction and attached to the rear portion of the side surface of the disc lid.

In the invention as claimed in claim 3, the disc lid has a size corresponding to the disc-like recording medium having a diameter of 8 cm.

In the invention as claimed in claim 4, the disc lid has a hand strap disposed on the outside thereof, the hand strap is loosened so that the disc lid can be opened in the lateral direction, one end of the hand strap is fixed to the lower portion of the front side of the outer case and the other end of the hand strap is fixed to somewhere of the rear side of the outer case.

In the invention as claimed in claim 5, the hand strap is composed of a supporting belt of which both ends are fixed to the outer case and a protecting pad attached to the supporting belt, one end of the supporting belt is joined to attachment metal fittings and the other end of the supporting belt is inserted from a through-hole formed in somewhere of the rear side of the outer case and joined to attachment metal fittings fixed to the inside of the outer case.

In the invention as claimed in claim 6, a front portion of the disc compartment portion of the outer case is projected in the forward direction from the lens apparatus at its front portion opposing the side of the object.

In the invention as claimed in claim 7, a grip portion for holding the image pickup apparatus with hand is formed by forming a narrow part from the front portion to the upper portion of the disc compartment portion of the outer case which overlaps with the disc lid.

In the invention as claimed in claim 8, there is provided an image pickup apparatus which is comprised of a table rotating apparatus for rotating a disc-like recording medium detachably loaded on a turntable, a pickup apparatus capable of recording an information signal of an image corresponding to light of an object inputted at least through a lens apparatus on the disc-like recording medium rotated by the table rotating apparatus, an outer case including a disc compartment portion for housing therein the table rotating apparatus and the pickup apparatus and in which the turntable is located, a disc lid attached to the outer case so as to become freely openable and closable to cover the disc compartment portion and a lid opening and closing mechanism for locking the disc lid in the state in which the disc compartment portion is closed and which can release the disc lid from being locked, in which the lid opening and closing mechanism includes a lock claw attached to the disc lid and a stopper claw which can be engaged with and disengaged from the lock claw and which is supported to the outer case so as to become movable and the stopper claw is disposed in a vacant area near the table rotating apparatus within the outer case and the pickup apparatus.

In the invention as claimed in claim 9, the vacant area is a portion which substantially overlaps with the disc-like recording medium mounted on the turntable and which is formed outside of a mechanical chassis for supporting the table rotating apparatus and the pickup apparatus.

In the invention as claimed in claim 10, the lid opening and closing mechanism includes a slide member slidably supported to a base plate fixed to the outer case and which has a stopper claw, a rotating lever for locking the slide member and which can release the slide member from being locked by the lock claw, a motor assembly body for moving the slide member to detach the stopper claw from the lock claw and a coil spring for spring-biasing the stopper claw in the direction in which the slide member is locked.

In the invention as claimed in claim 11, the motor assembly body includes a rotary cam for moving the slide member, a drive motor for rotating the rotary cam and a detection switch for detecting the rotation position of the rotary cam to thereby control driving of the drive motor.

In the invention as claimed in claim 12, there is provided an image pickup apparatus which is comprised of a table rotating apparatus for rotating a disc-like recording medium detachably loaded on a turntable, a pickup apparatus capable of recording an information signal of an image corresponding to light of an object inputted at least through a lens apparatus on the disc-like recording medium rotated by the table rotating apparatus, an outer case including a disc compartment portion for housing therein the table rotating apparatus and the pickup apparatus and in which the turntable is located, a disc lid attached to the outer case so as to become freely openable and closable to cover the disc compartment portion, a viewfinder for recognizing an image of the object, an accessory shoe attached to the outer case and to which an electronic device is detachably attached, a viewfinder moving mechanism for moving the viewfinder close to or away from the accessory shoe, wherein the viewfinder is detached from the accessory shoe by moving the viewfinder moving mechanism to thereby open an insertion slot of the accessory shoe and the electronic device can be attached to the accessory shoe from the insertion slot.

In the invention as claimed in claim 13, the accessory shoe has an upper end portion of which height is substantially the same as that of an upper end portion of the viewfinder.

In the invention as claimed in claim 14, the accessory shoe is located ahead of the viewfinder on the upper surface portion of the outer case.

In the invention as claimed in claim 15, the viewfinder moving mechanism moves the viewfinder in the forward and backward direction in parallel to the optical axis direction of the lens apparatus.

In the invention as claimed in claim 16, the viewfinder moving mechanism includes a holder with a guide groove having U-like cross-section in which side surface members thereof are respectively continued to both ends of its central member and which is extended in the direction in which the cross-section shape is continued to the central member and a slider accommodated within the holder and which includes a guide pin engaged with the guide groove so as to become freely slidable, wherein the guide groove and the guide pin are hidden by both surfaces of the central member.

In the invention as claimed in claim 17, the holder includes an outside holder having the guide groove and which is made of a metal material and an inside holder accommodated within the outside holder and which is made of a synthetic resin and the inside holder hides one surface of the central member.

In the invention as claimed in claim 18, the holder has an outside cover provided on its outer surface to hide a member for hiding one surface of the central member and a part of a flexible wiring board led out from the viewfinder is interposed between the outside cover and the hiding member and thereby led out to the outside.

According to the invention as claimed in claim 1, since the disc lid can be rotatably supported by the rotary shaft portion provided on the rear portion of the side surface of the outer case and the disc lid can be opened to the front so that the disc lid can be opened in the lateral direction, the disc lid can be opened and closed relatively easily and the opening angle of the disc lid can be increased so that the disc-like recording medium can be easily loaded on and unloaded from the turntable from the front side of the image pickup apparatus.

According to the invention as claimed in claim 2, since approximately 3/4 of the outer periphery except the portion in which the rotary shaft portion of the disc lid is provided is circular and the axis line of the rotary shaft portion is extended in the upper and lower direction and the rotary shaft portion is attached to the rear portion of the side surface of the disc lid, the disc lid can be opened and closed in the lateral direction relatively easily and the opening angle of the disc lid can be increased so that the disc-like recording medium can be easily loaded on and unloaded from the turntable easily.

According to the invention as claimed in claim 3, since the disc lid has the size corresponding to the disc-like recording medium having the diameter of 8 cm, while the size of the whole of the image pickup apparatus is made corresponding to the size of the disc-like recording medium, the whole of the image pickup apparatus can be miniaturized by miniaturizing the lens apparatus side as much as possible.

According to the invention as claimed in claim 4, since the hand strap is located outside the disc lid, one end of the hand strap is fixed to the lower portion of the front side of the outer case and the other end thereof is fixed to somewhere of the rear side of the outer case, the hand strap can prevent the image pickup apparatus from being dropped inadvertently and the disc lid can be opened with a large angle in the lateral direction so as to avoid the hand strap.

According to the invention as claimed in claim 5, since the hand strap is composed of the supporting belt and the protecting pad and both ends of the supporting belt with its intermediate portion being protected with the protecting pad are joined to attachment metal fittings fixed to the outer case, the hand strap can be firmly fixed to the outer case and user's hand can be protected softly by the protecting pad.

According to the invention as claimed in claim 6, since the front portion of the disc compartment portion of the outer case is projected in the forward direction from the lens apparatus at its front portion opposing the side of the object, the whole of the image pickup apparatus can be miniaturized by miniaturizing the lens apparatus and the like.

According to the invention as claimed in claim 7, since the grip portion is formed by forming the narrow part on the portion from the front portion to the upper portion of the disc compartment portion of the outer case which overlaps with the disc lid, the grip portion becomes large in size to increase stability with which the user holds the image pickup apparatus with the grip portion and it becomes possible for the user to shoot an image of the object with stability by firmly holding the image pickup apparatus with the large grip portion.

According to the invention as claimed in claim 8, since the lock claw is attached to the disc lid, the stopper claw is supported to the outer case so as to become freely movable and the stopper claw is located in the vacant area near the disc rotating apparatus and the pickup apparatus within the outer case, the vacant area which does not overlap with the disc drive apparatus within the outer case can be used effectively, and the whole of the image pickup apparatus can be made small in size and made thin in thickness by miniaturizing the outer case.

According to the invention as claimed in claim 9, since the vacant area is set to the space outside the mechanical chassis and which does not contact with the disc-like recording medium although such space overlaps with the disc-like recording medium, the space within the outer case can be used effectively and the outer case can be made small in size and made thin in thickness.

According to the invention as claimed in claim 10, since the lid opening and closing mechanism is composed of the slide member, the rotating lever, the motor assembly body and the coil spring, the lock claw and the stopper claw can be locked and unlocked easily and reliably by the relatively simple arrangement.

According to the invention as claimed in claim 11, since the motor assembly body is composed of the rotary cam, the drive motor and the detection switch, the slide member can be easily and reliably slid by the relatively simple arrangement.

According to the invention as claimed in claim 12, since the insertion slot of the accessory shoe is opened by moving the viewfinder with the viewfinder moving mechanism, the electronic device attachment portion is inserted into the space portion formed after the viewfinder was moved and the electronic device attachment portion is inserted into the insertion slot from the space portion, the accessory shoe can be buried into the outer case and hence it is possible to prevent a protruded portion from being produced. Therefore, the accessory shoe can be prevented from being projected from the surface of the outer case, the design of the image pickup apparatus can be made neat and the image pickup apparatus looks like a simple image pickup apparatus. Also, the viewfinder can be prevented from disturbing the user when the user operates the image pickup apparatus.

According to the invention as claimed in claim 13, since the upper end portion of the accessory shoe has substantially the same height as that of the upper end portion of the viewfinder, the image pickup apparatus can be substantially formed as one body with the viewfinder from a design standpoint and the whole of the image pickup apparatus can be miniaturized.

According to the invention as claimed in claim 14, since the viewfinder is located ahead of the accessory shoe, the viewfinder can be buried into the outer case together with the accessory shoe and thereby the whole of the image pickup apparatus can be miniaturized.

According to the invention as claimed in claim 15, since the viewfinder is moved back and forth in parallel to the optical axis direction of the lens apparatus by the viewfinder moving mechanism, the electronic device can be attached and detached by using the space produced after the viewfinder was moved. Also, when the viewfinder is returned to the original position, it is possible to prevent the electronic device from being dropped after the attachment portion of the electronic device mounted on the accessory shoe was loosened or the electronic device cannot be substantially removed from the accessory shoe.

According to the invention as claimed in claim 16, since the viewfinder moving mechanism includes the holder and the slider and the guide groove and the guide pin are hidden by both surfaces of the central member of the holder, even when the projected end is produced in the guide pin, it is possible to reliably prevent other assemblies from being damaged by such projected end.

According to the invention as claimed in claim 17, since the holder is composed of the outside holder and the inside holder and one surface of the central member is hidden by the inside holder, even when the projected end is produced in the guide pin, it is possible to reliably prevent other assemblies from being damaged by such projected end.

Also, according to the invention as claimed in claim 18, since the flexible member is interposed between the outside cover and the member for hiding a part of the central member, it is possible to effectively prevent other assemblies from being damaged by the guide pin.

The image pickup apparatus in which the disc lid can be opened to the front so that the disc lid can be opened and closed relatively easily and in which the opening angle of the disc lid can be increased so that the disc-like recording medium can be loaded on and unloaded from the turntable from the front side easily can be realized by the simple structure.

Further, since the front portion of the disc compartment portion of the outer case is projected in the forward direction from the lens apparatus at its front portion opposing the side of the object, in response to the size of the disc-like recording medium used as the recording medium, the lens apparatus and the like can be miniaturized so that the whole of the image pickup apparatus can be miniaturized by the simple structure.

Further, since the stopper claw is located in the vacant area which does not overlap with the disc drive apparatus within the outer case, the vacant space within the outer case can be used effectively, the outer case can be miniaturized and the whole of the image pickup apparatus can be miniaturized by the simple structure.

Furthermore, since the accessory shoe is designed so as not be projected from the surface of the outer case, the design of the image pickup apparatus can be made neat and the image pickup apparatus looks like a simple image pickup apparatus. The image pickup apparatus without projected portion which disturbs operations of the image pickup apparatus can be realized by the simple structure.

Also, the image pickup apparatus having the viewfinder moving mechanism in which other assemblies can be protected from being damaged by the movement of the guide pin of the viewfinder moving mechanism can be realized by the simple structure.

### BRIEF DESCRIPTION OF THE DRAWINGS

FIG. 1 is a perspective view showing an image pickup apparatus according to an embodiment of the present invention;
FIG. 2 is a front view showing the image pickup apparatus according to the embodiment of the present invention;
FIG. 3 is a plan view showing the image pickup apparatus according to the embodiment of the present invention;
FIG. 4 is a side view showing the image pickup apparatus according to the embodiment of the present invention;
FIG. 5 is a rear perspective view showing the image pickup apparatus shown in FIG. 1 with its display apparatus being opened in the lateral direction;
FIG. 6 is a rear perspective view showing the image pickup apparatus shown in FIG. 1 with its power supply battery being attached thereto;
FIG. 7 is a rear perspective view showing the image pickup apparatus shown in FIG. 1 with its disc lid being opened;
FIG. 8 is a perspective view showing the image pickup apparatus shown in FIG. 1 and to which reference will be made in explaining the manner which the opened disc lid and a hand strap interfere with each other;
FIG. 9 is a side view showing the image pickup apparatus shown in FIG. 1 with its disc lid being opened;
FIG. 10 is an explanatory diagram showing the state in which a grip portion of the image pickup apparatus shown in FIG. 1 is held by a user with hand when the image pickup apparatus is in use;
FIG. 11 is a perspective view showing a disc-side panel, a lid opening and closing mechanism and a mechanical chassis of the image pickup apparatus according to the present invention;
FIG. 12 is an explanatory diagram showing the state in which the disc-side panel, the lid opening and closing mechanism and the mechanical chassis of the image pickup apparatus according to the present invention are assembled;
FIG. 13 is a perspective view showing a motor assembly body of the image pickup apparatus according to the present invention;
FIG. 14 is an explanatory diagram to which reference will be made in explaining operations of the motor assembly body of the image pickup apparatus according to the present invention and illustrates the state in which a cam pin of a rotary cam is brought in contact with a first cam protruded portion of a swing lever;
FIG. 15 is an explanatory diagram to which reference will be made in explaining operations of the motor assembly body of the image pickup apparatus according to the present invention and illustrates the state in which the cam pin of the rotary cam is detached from the first cam protruded portion of the swing lever;
FIG. 16 is an explanatory diagram to which reference will be made in explaining operations of the motor assembly body of the image pickup apparatus according to the preset invention and illustrates the state in which the cam pin of the rotary cam is brought in contact with a second cam protruded portion of the swing lever;
FIG. 17 is an explanatory diagram to which reference will be made in explaining operations of the motor assembly body of the image pickup apparatus according to the present invention and illustrates the state in which the cam pin of the rotary cam is brought in contact with an operation portion of a slide member;
FIG. 18 is an explanatory diagram to which reference will be made in explaining operations of the motor assembly body of the image pickup apparatus according to the present invention and illustrates the state in which the cam pin of the rotary cam is detached from the operation portion of the slide member;
FIG. 19 is an explanatory diagram to which reference will be made in explaining operations of the motor assembly body of the image pickup apparatus according to the present invention and illustrates the state in which the cam pin of the rotary cam is brought in contact with the first cam protruded portion of the swing lever;
FIG. 20 is an explanatory diagram to which reference will be made in explaining operations of the lid opening and closing mechanism of the image pickup apparatus according to the present invention and illustrates the state in which a pair of lock claws of a lock member is engaged with a pair of stopper claws of the slide member;
FIG. 21 is an explanatory diagram to which reference will be made in explaining operations of the lid opening and closing mechanism of the image pickup apparatus according to the present invention and illustrates the state in which a pair of lock claws of the lock member is detached from a pair of stopper claws of the slide member;
FIG. 22 is an explanatory diagram to which reference will be made in explaining operations of the lid opening and closing mechanism of the image pickup apparatus according to the present invention and illustrates the state in which a pair of lock claws is detached from the slide member as the disc lid is opened;
FIG. 23 is an explanatory diagram to which reference will be made in explaining operations of the lid opening and closing mechanism and illustrates the state in which a pair of lock claws is entered into the slide member as the disc lid is closed;
FIG. 24 is a partly cross-sectional view of a main portion of the image pickup apparatus according to the present invention and illustrates the state in which an electronic viewfinder of the image pickup apparatus is contracted with pressure to close the insertion slot of the accessory shoe;
FIG. 25 is a partly cross-sectional view of a main portion of the image pickup apparatus according to the present invention and illustrates the state in which an electronic viewfinder of the image pickup apparatus is pulled out to open the insertion slot of the accessory shoe;
FIG. 26 is a perspective view showing an electronic viewfinder of the image pickup apparatus according to the present invention;
FIG. 27 is a perspective view showing the state in which an electronic display apparatus is mounted on a viewfinder moving mechanism of an electronic view finder of the image pickup apparatus according to the present invention from the flat surface side;
FIG. 28 is a perspective view showing the viewfinder moving mechanism of the electronic viewfinder of the image pickup apparatus according to the present invention from the flat surface side;
FIG. 29 is a perspective view showing the viewfinder moving mechanism of the electronic viewfinder of the image pickup apparatus from the bottom surface side;
FIG. 30A is a plan view of the viewfinder moving mechanism of the electronic viewfinder of the image pickup apparatus according to the present invention;
FIG. 30B is a left-hand side view thereof;
FIG. 30C is a right-hand side view thereof;
FIG. 31A is a bottom view showing the viewfinder moving mechanism of the electronic viewfinder of the image pickup apparatus according to the present invention;
FIG. 31B is a front view thereof;
FIG. 31C is a rear view thereof;
FIG. 32 is an exploded perspective view showing the viewfinder moving mechanism of the electronic viewfinder of the image pickup apparatus according to the present invention from the flat surface side;
FIG. 33 is an exploded perspective view showing the viewfinder moving mechanism of the electronic viewfinder of the image pickup apparatus according to the present invention from the bottom surface side;
FIG. 34 is a perspective view showing the viewfinder moving mechanism of the electronic viewfinder of the image pickup apparatus according to the present invention from the bottom surface side;
FIGS. 35A and 35B show the viewfinder moving mechanism of the electronic viewfinder of the apparatus according to the present invention, in which FIG. 35A is a bottom view showing the state in which a wiring board cover and a pin cover are removed from the viewfinder moving mechanism and FIG. 35B is a bottom view showing the state in which the pin cover is attached to the viewfinder moving mechanism, respectively;
FIG. 36A is a plan view of a slider of the electronic viewfinder of the image pickup apparatus according to the present invention;
FIG. 36B is a side view thereof;
FIG. 36C is a bottom view thereof;
FIG. 37 is a perspective view showing a holder main body of the electronic viewfinder of the image pickup apparatus according to the present invention;
FIG. 38 is a perspective view showing a slider main body of the electronic viewfinder of the image pickup apparatus according to the present invention;
FIG. 39 is a perspective view showing a joint body of the electronic viewfinder of the image pickup apparatus according to the present invention;
FIG. 40 is a perspective view of a flash apparatus showing a specific example of an accessory of the image pickup apparatus according to the present invention;
FIG. 41 is an explanatory diagram showing the state in which the flash apparatus shown in FIG. 40 is attached to the accessory shoe of the image pickup apparatus according to the present invention;
FIG. 42 is an explanatory diagram showing the state in which the electronic viewfinder of the image pickup apparatus according to the present invention is inclined upward with an angle of approximately 45 degrees from the state shown in FIG. 41; and
FIG. 43 is an explanatory diagram showing the state in which the electronic viewfinder of the image pickup apparatus according to the present invention is inclined upward with an angle of approximately 90 degrees from the state shown in FIG. 41.

### DESCRIPTION OF THE PREFERRED EMBODIMENTS

### [Embodiment 1]

The present invention will be described with reference to the accompanying drawings.

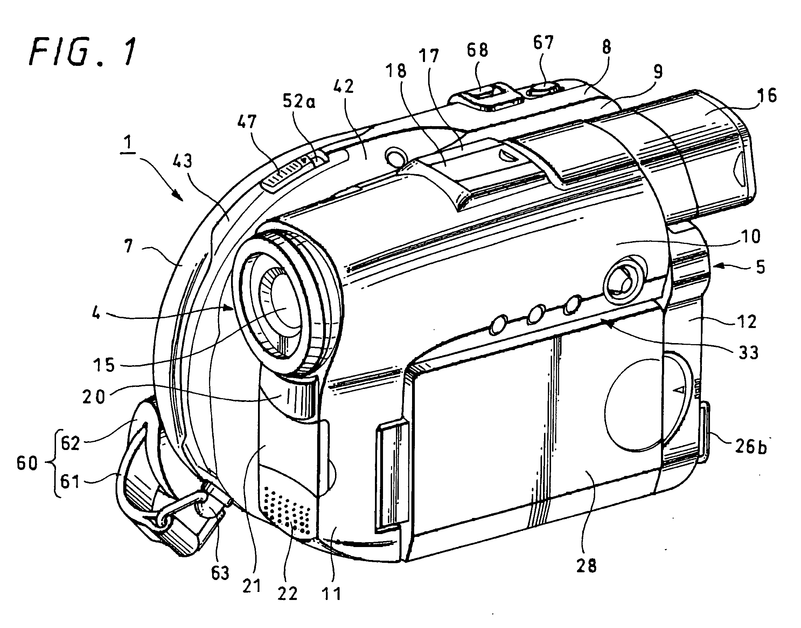

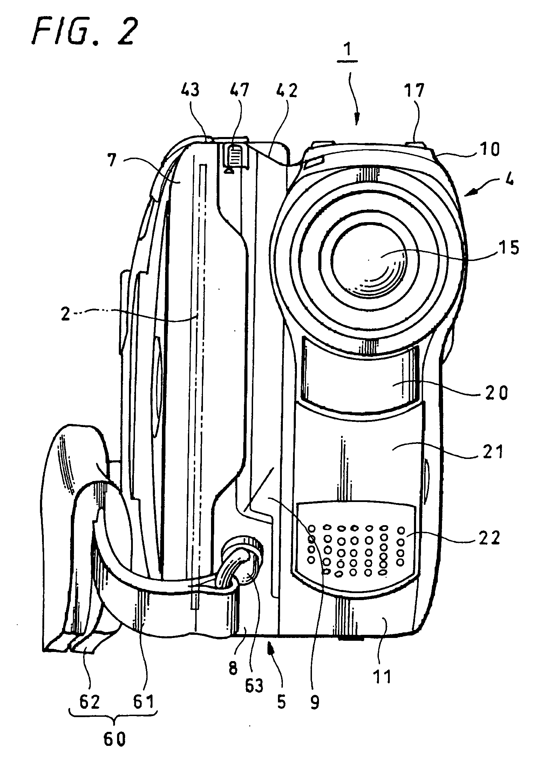

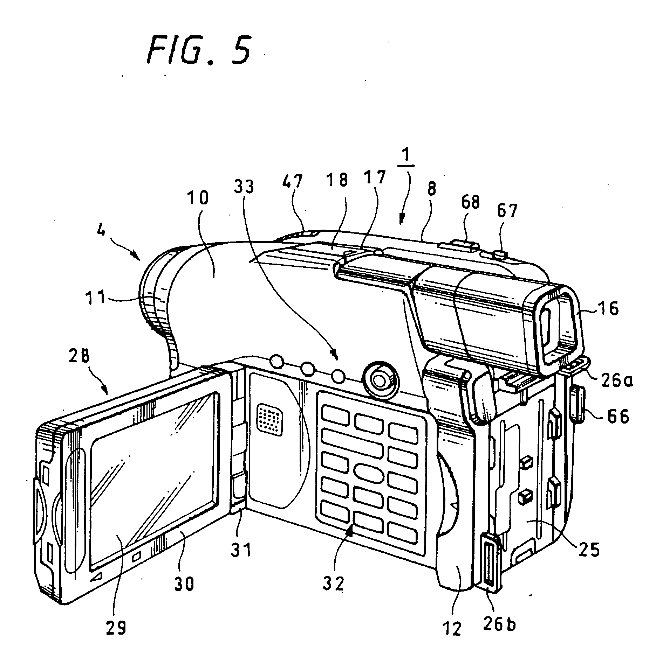

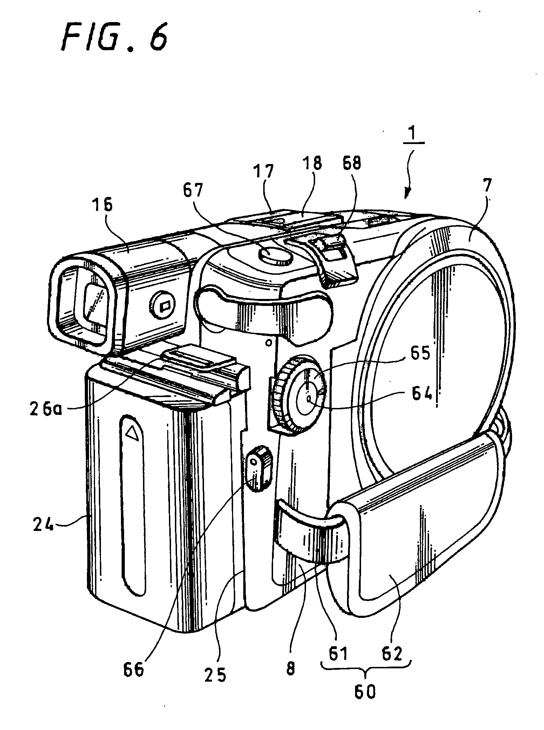

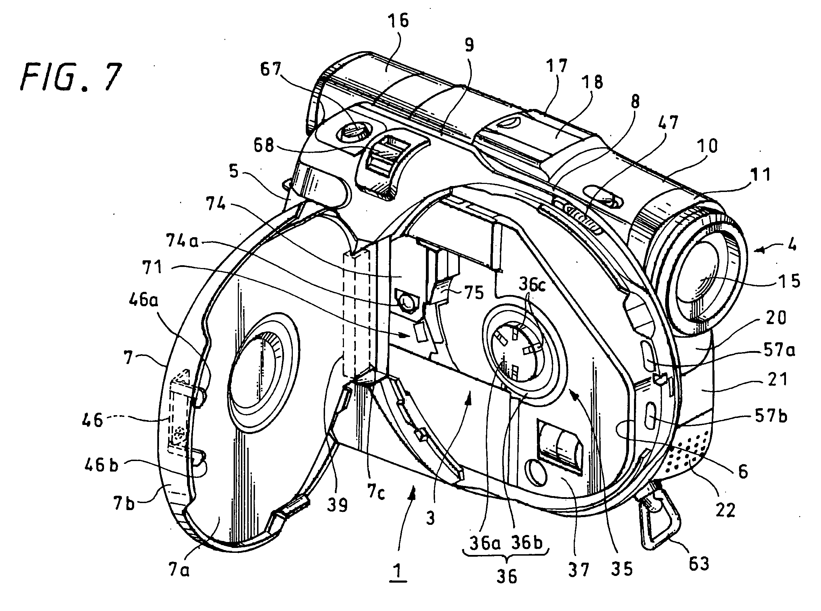

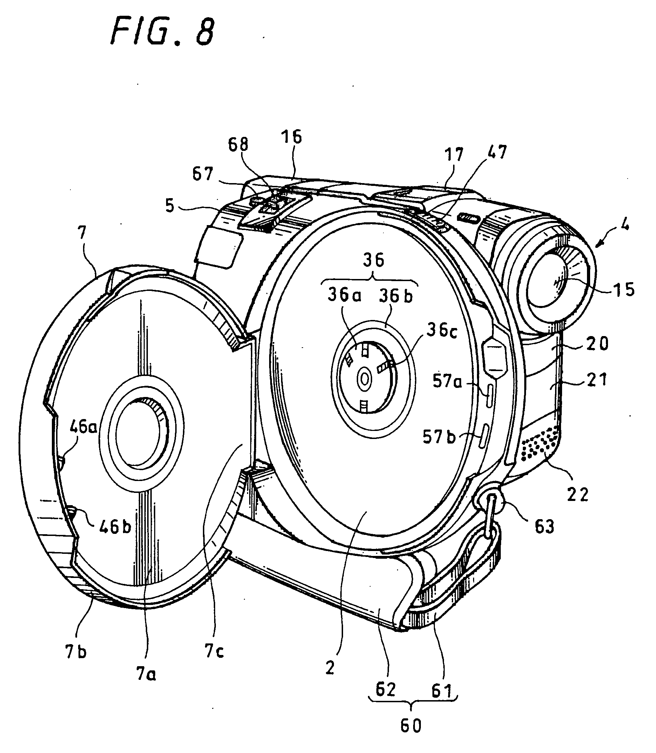

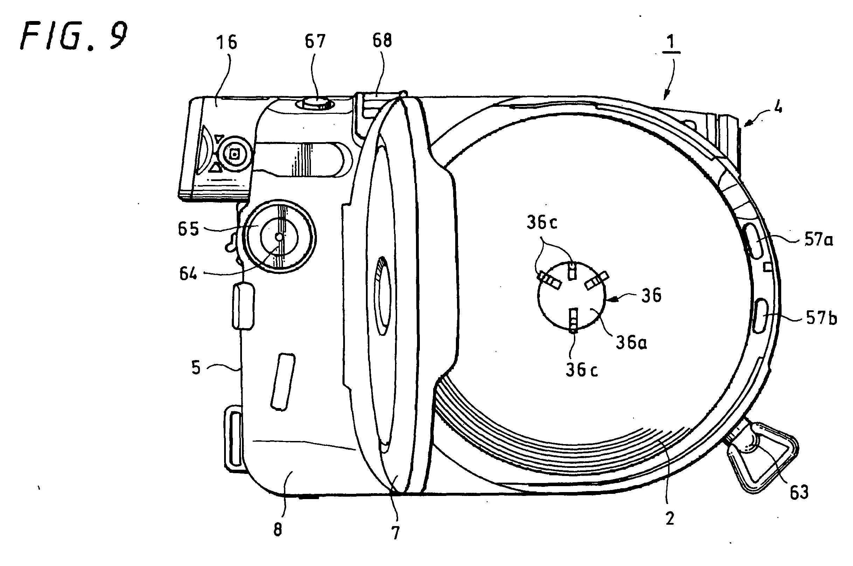

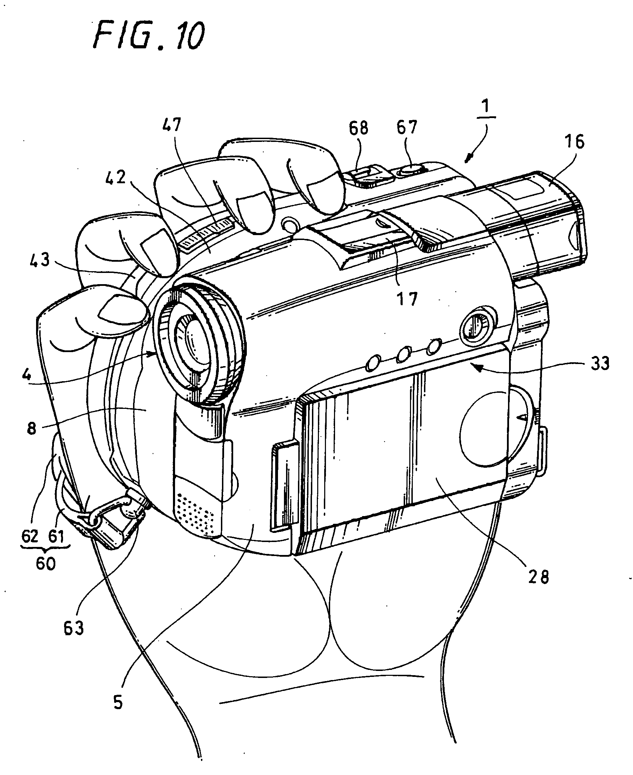

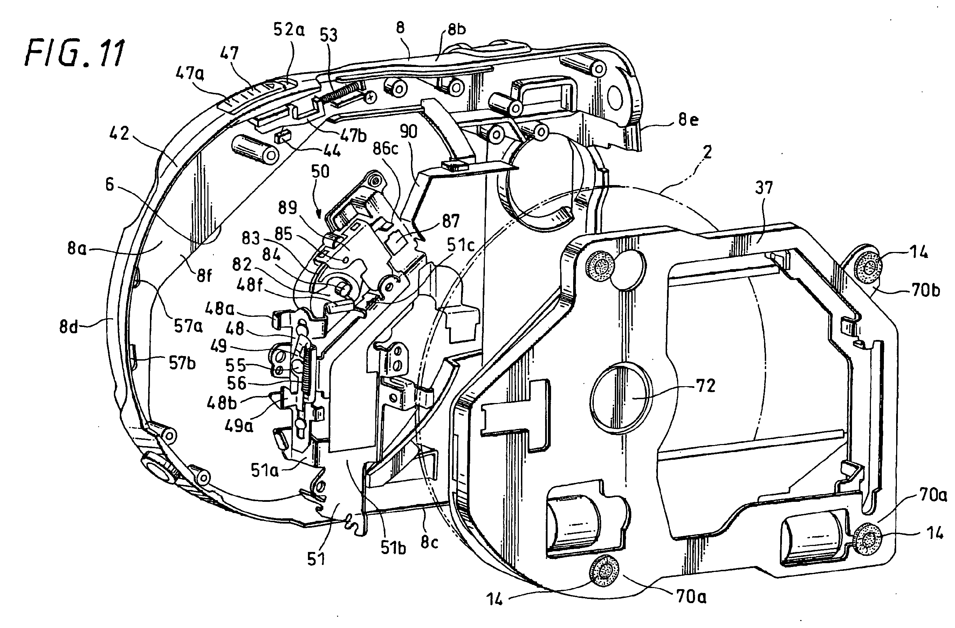

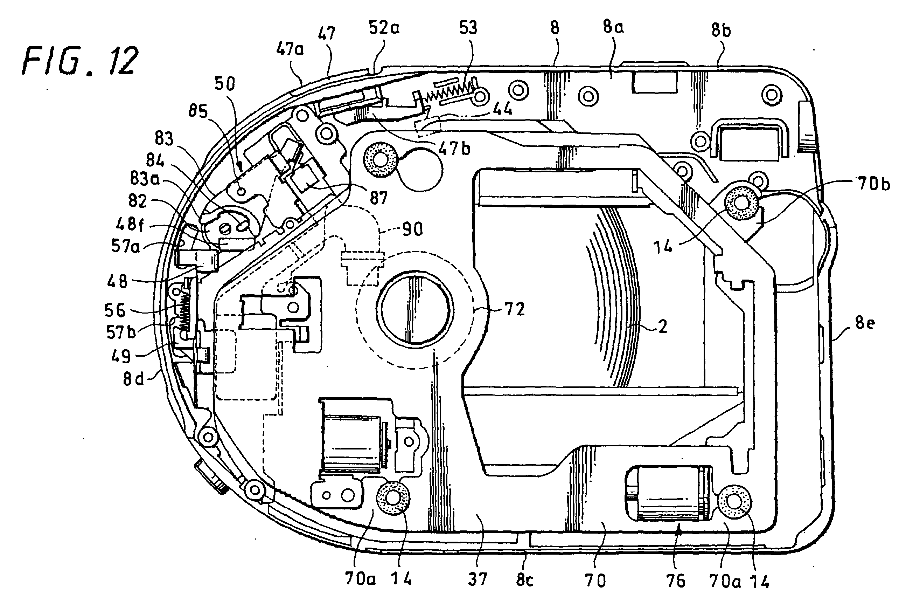

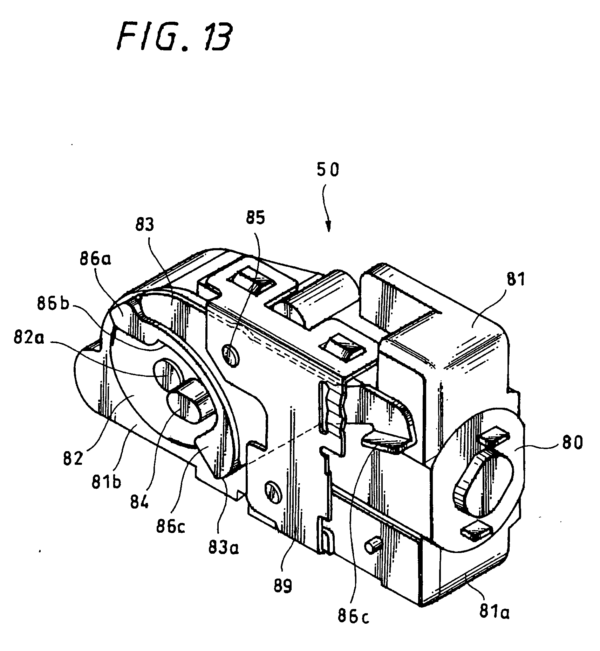

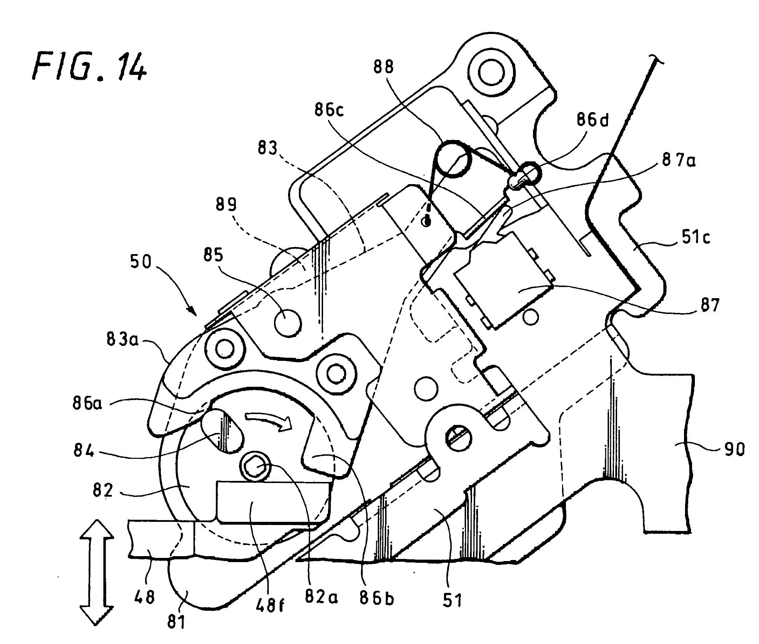

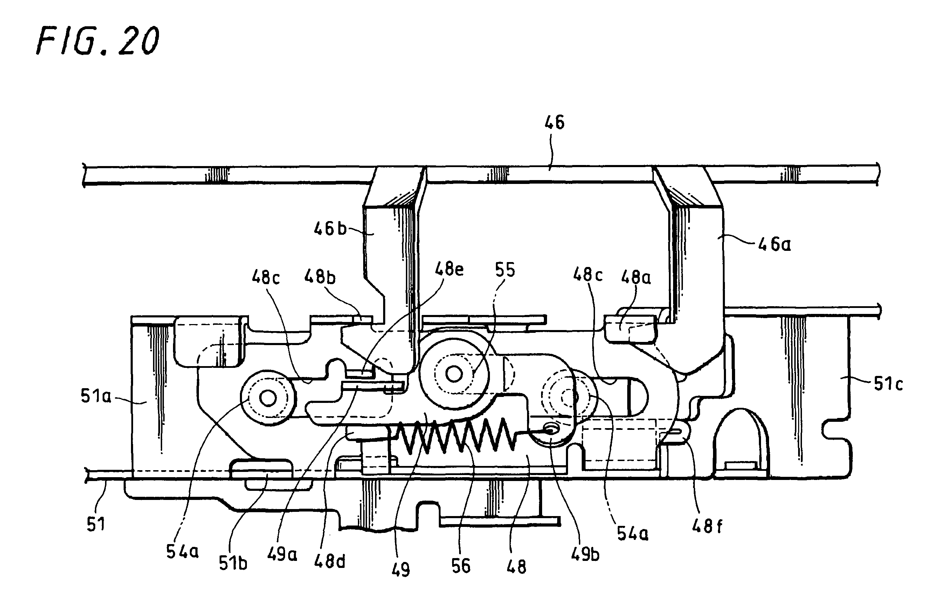

FIGS. 1 to 43 show image pickup apparatus according to embodiments of the present invention. More specifically, FIGS. 1 to 4 are a perspective view, a front view, a plan view and a side view showing an image pickup apparatus according to the present invention; FIG. 5 is a rear perspective view showing the image pickup apparatus with its display apparatus being opened; FIG. 6 is a perspective view showing the image pickup apparatus from the rear side of the disc; FIG. 7 is a front perspective view showing the image pickup apparatus with its disc lid being opened; FIG. 8 is a perspective view showing the image pickup apparatus with its disc-like recording medium attached thereto; FIG. 9 is a side view of the image pickup apparatus according to the present invention; FIG. 10 is an explanatory diagram showing the state in which the image pickup apparatus is held by hand when it is in use; FIG. 11 is a perspective view showing a disc-side panel of an outer case, a lid opening and closing mechanism and a disc drive apparatus of the image pickup apparatus according to the present invention; FIG. 12 is an explanatory diagram showing the assembled state; FIG. 13 is a perspective view showing a motor assembly body of the lid opening and closing mechanism of the image pickup apparatus according to the present invention; FIGS. 14 to 19 are explanatory diagrams used to explain operations of the motor assembly body of the image pickup apparatus according to the present invention, respectively; and FIGS. 20 to 23 are explanatory diagrams used to explain operations of the lid opening and closing mechanism of the image pickup apparatus according to the present invention, respectively.

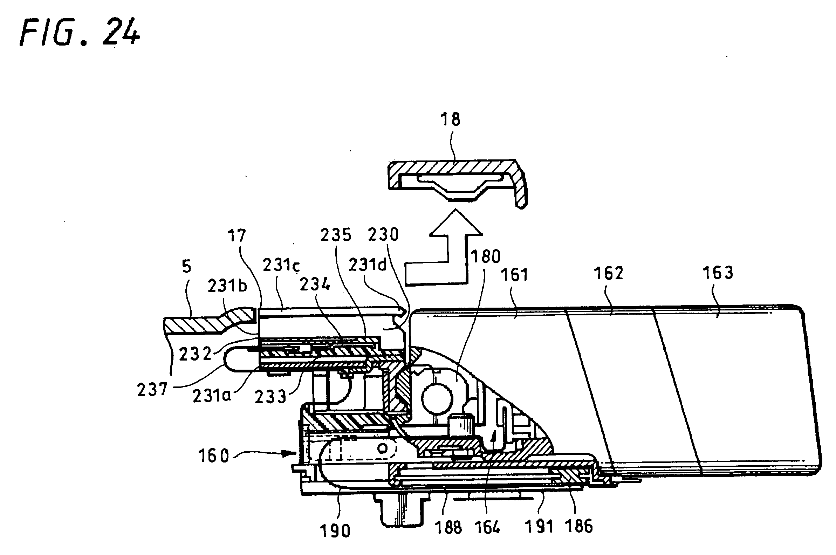

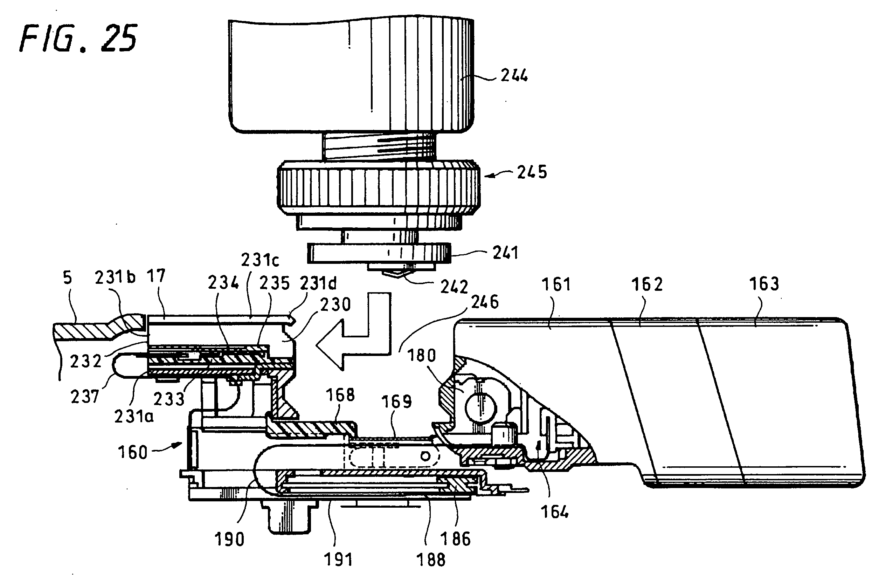

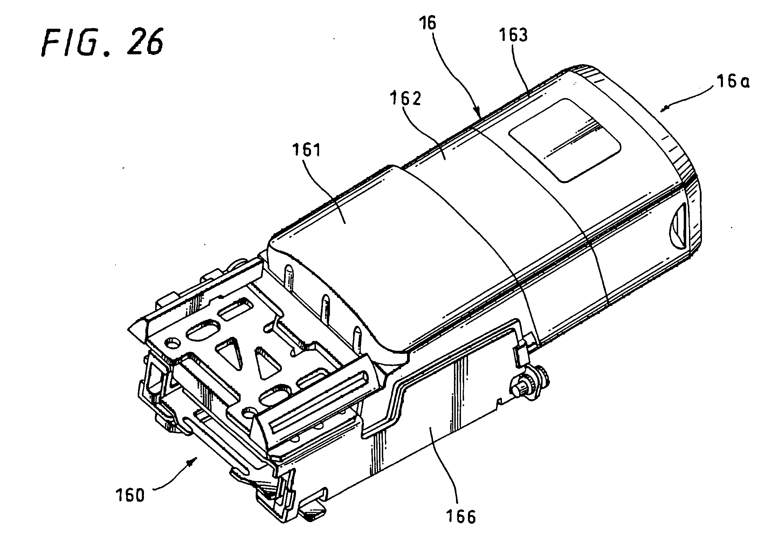

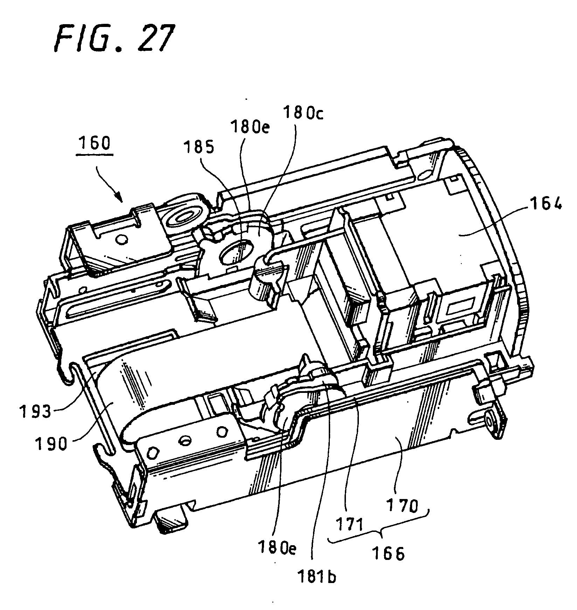

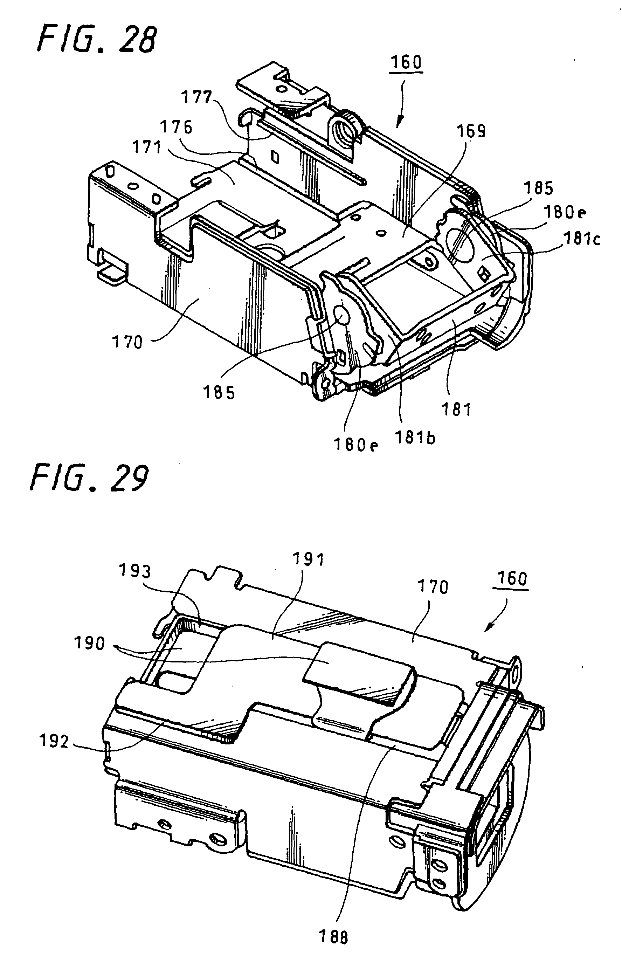

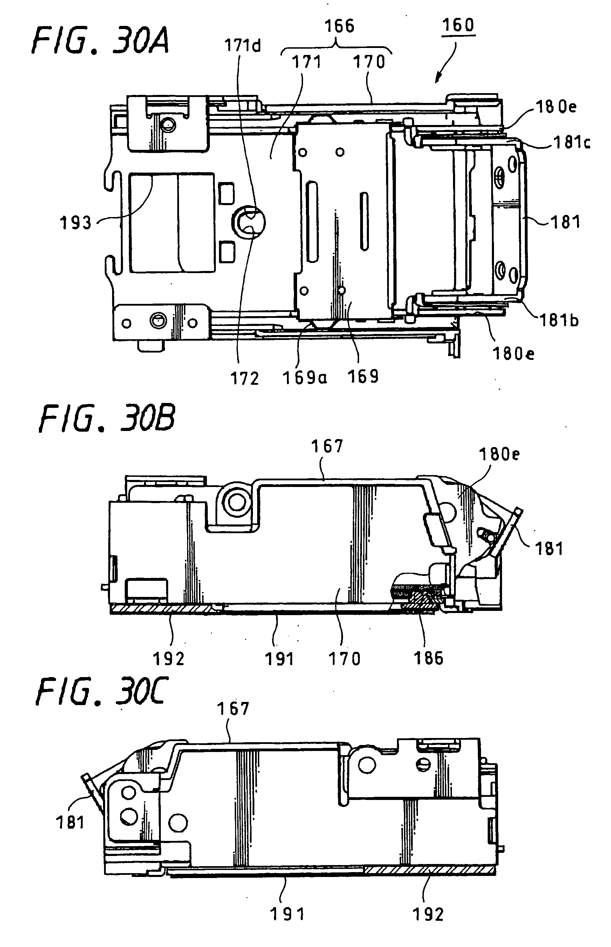

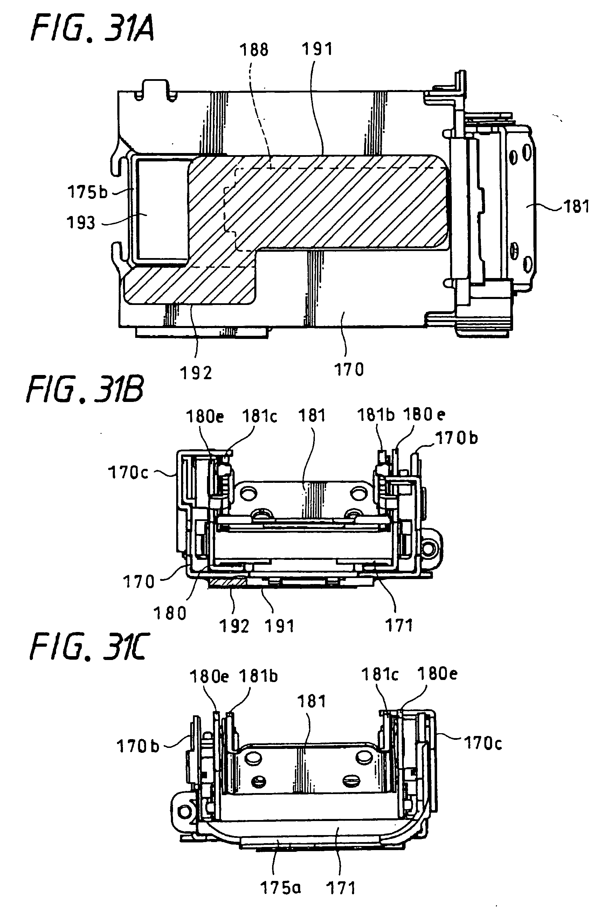

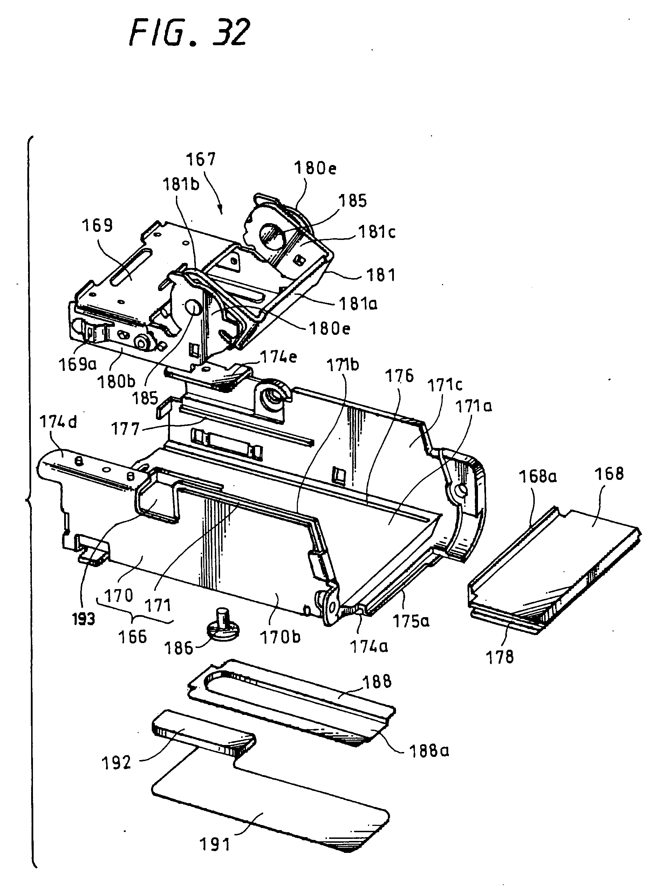

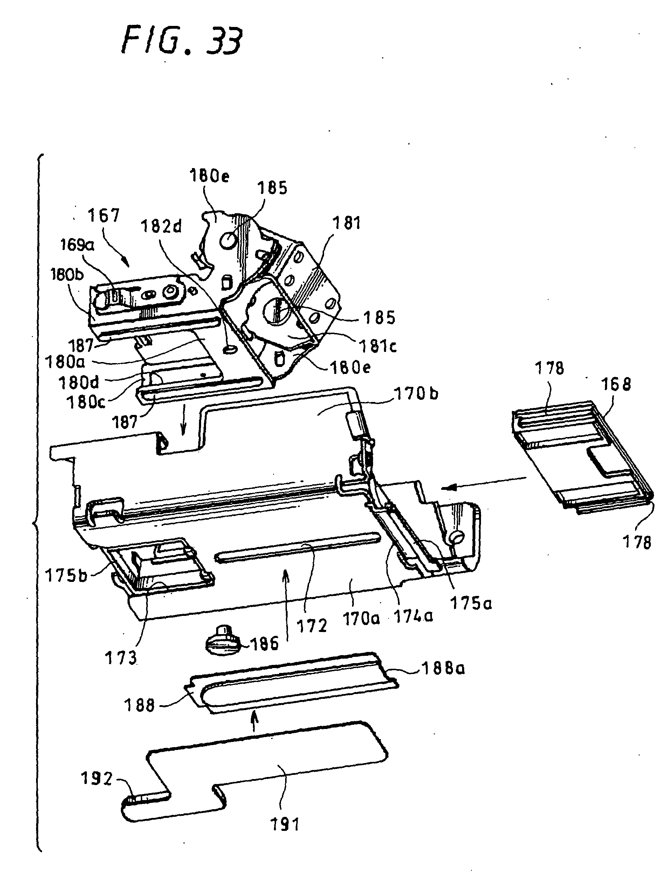

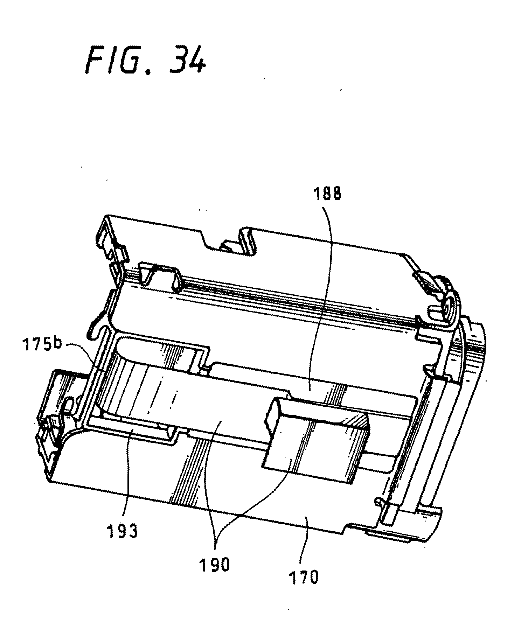

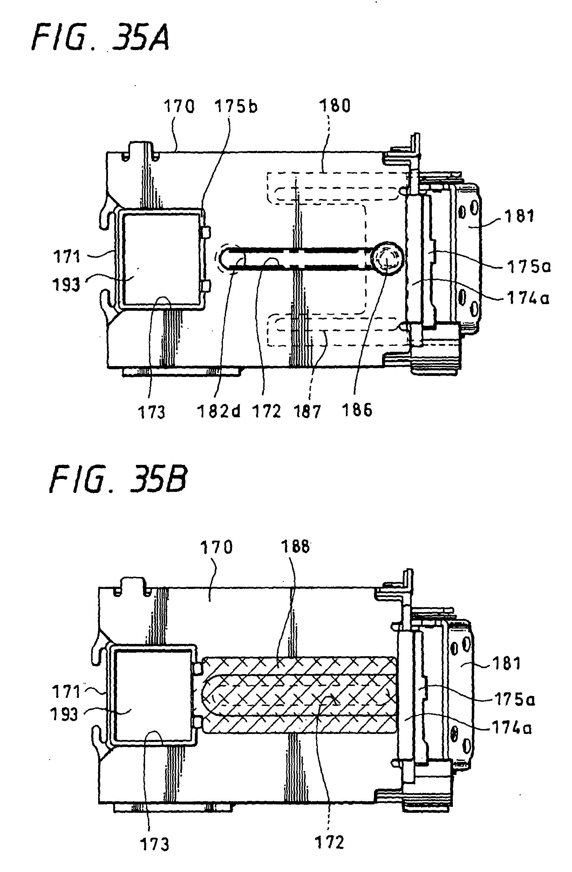

FIG. 24 is a partly cross-sectional view showing main portions of an electronic viewfinder and an accessory shoe of the image pickup apparatus according to the present invention; FIG. 25 is an explanatory diagram showing the state in which the electronic viewfinder is moved; FIG. 26 is a perspective view of an electronic viewfinder and a viewfinder moving mechanism; FIG. 27 is a perspective view showing the viewfinder moving mechanism with an electronic display apparatus mounted thereon from the upper surface side; FIG. 28 is a perspective view showing the viewfinder moving mechanism from the upper surface side; FIG. 29 is a perspective view showing the viewfinder moving mechanism from the lower surface side; FIGS. 30A to 30C are a plan view of the viewfinder moving mechanism, a right-hand side view thereof and a left-hand side view thereof, respectively; FIGS. 31A to 31C are a bottom view of the viewfinder moving mechanism, a front view thereof and a rear view thereof, respectively; FIG. 32 is an exploded perspective view showing the viewfinder moving mechanism from the upper surface side; FIG. 33 is an exploded perspective view showing the viewfinder moving mechanism from the lower surface side; FIG. 34 is a perspective view showing the state in which a wiring board cover is removed from the viewfinder moving mechanism shown in FIG. 29; and FIGS. 35A and 35B are bottom views of the viewfinder moving mechanism, respectively.

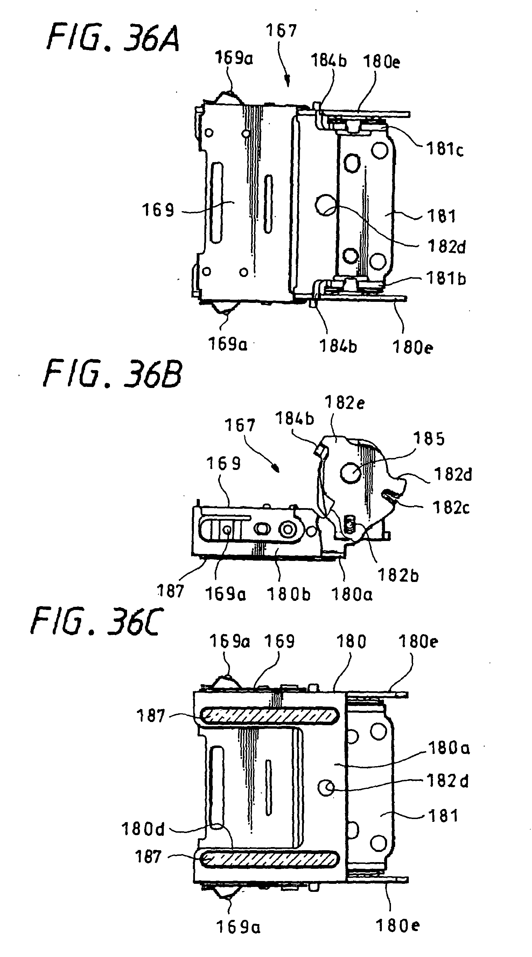

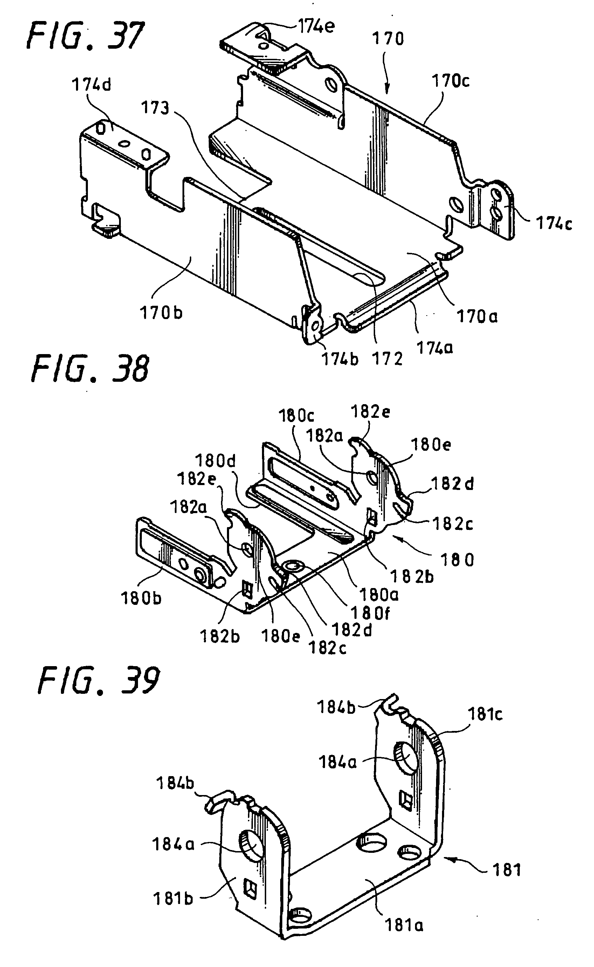

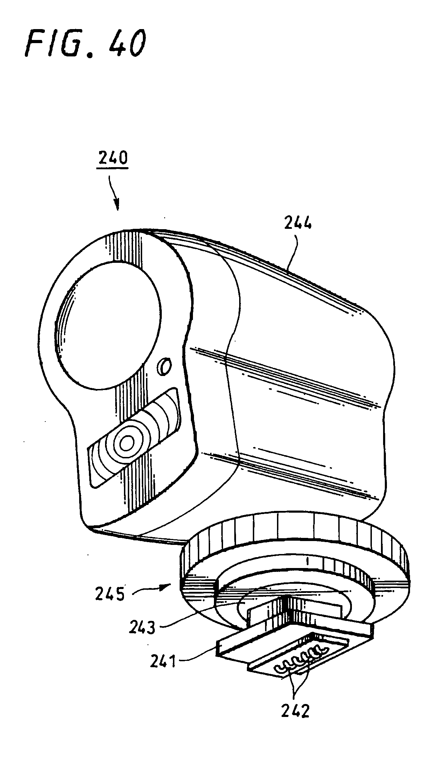

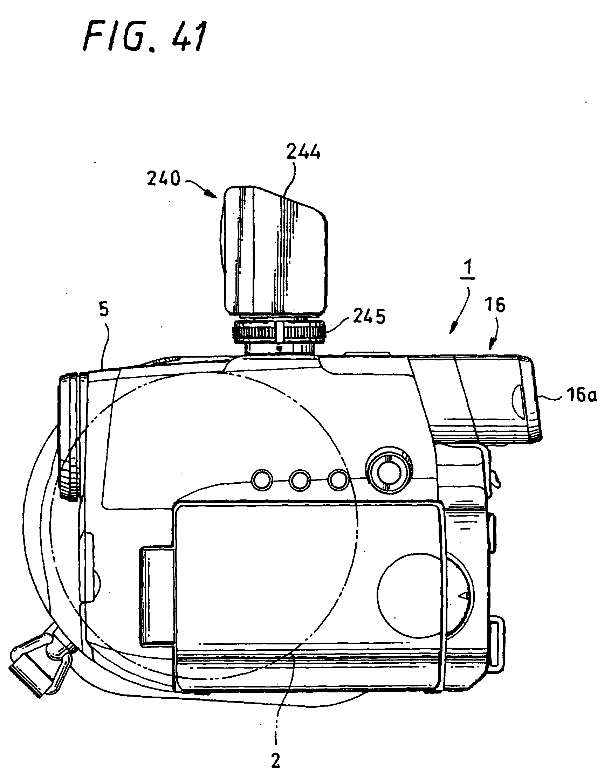

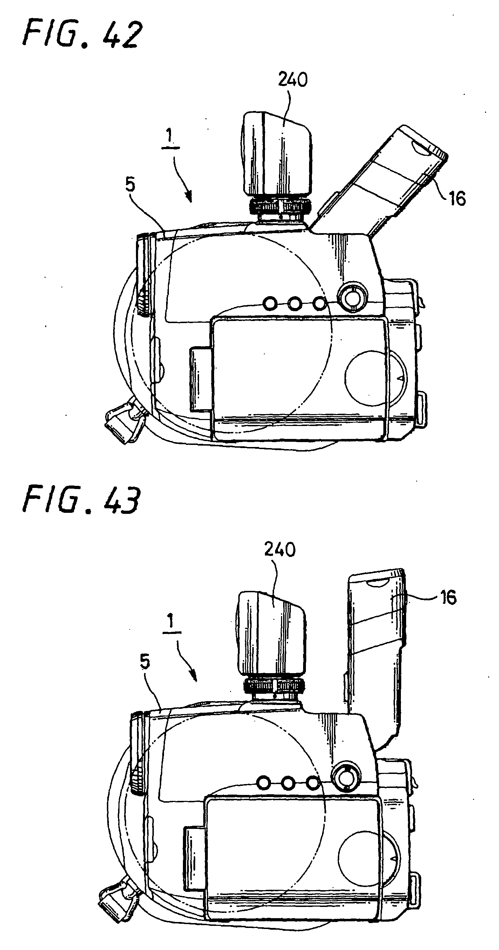

FIGS. 36A to 36C are a plan view of the slider of the viewfinder moving mechanism, a side view thereof and a bottom view thereof, respectively; FIG. 37 is a perspective view showing a bolder main body of the viewfinder moving mechanism; FIG. 38 is a like perspective view showing a slider main body; FIG. 39 is a like perspective view showing a joint body; FIG. 40 is a perspective view showing a flash apparatus as a specific example of an electronic device; FIG. 41 is an explanatory diagram showing the state in which the flash apparatus shown in FIG. 40 is attached to the image pickup apparatus shown in FIG. 1; FIG. 42 is an explanatory diagram showing the state in which the viewfinder of the image pickup apparatus shown in FIG. 41 is inclined with an angle of approximately 45 degrees; and FIG. 43 is an explanatory diagram showing the state in which the viewfinder of the image pickup apparatus shown in FIG. 41 is inclined with an angle of approximately 90 degrees.

The image pickup apparatus shown in FIGS. 1 to 10 can use a DVD (digital versatile disc) with a diameter of 8 cm as a specific example of a disc-like recording medium serving as information recording media, it can convert an optical image into an electric signal by a CCD (charge-coupled device) solid-state image pickup device to record the electric signal on the DVD or it can display an optical image on a display apparatus such as a liquid-crystal monitor. This image pickup apparatus will hereinafter be referred to as a "disc type image pickup apparatus". However, the disc-like recording medium of the present invention is not limited to the DVD and it is needless to say that the present invention can use other recordable optical discs such as a CD-ROM (CD-read-only memory). Further, disc-like recording mediums of other recording system such as a magneto-optical disc and a magnetic disc can be applied to the present invention. Furthermore, it is needless to say that the recording medium is not limited to the disc-like recording medium and that a tape cassette using a tape-like recording medium, a semiconductor recording medium using a semiconductor memory and other various recording mediums can be used.

This disc type image pickup apparatus 1 comprises a disc drive apparatus 3 (see FIGS. 7 to 9) for rotating a DVD 2 detachably attached to the disc drive apparatus 3 to record (write) an information signal on the DVD 2 and to reproduce (read) an information signal from the DVD 2, a control circuit (not shown) for controlling this disc drive apparatus 3, a lens apparatus 4 for introducing an image of an object into a CCD as light, an outer case 5 for housing therein the disc drive apparatus and the like, a disc lid 7 rotatably attached to this outer case 5 to open and close a disc compartment portion 6, etc.

The outer case 5 comprises a disc-side panel 8, a central portion-panel 9 and a display apparatus-side panel 10, which are assembled three-fold, a front panel 11 and a rear panel 12 located ahead of and behind the optical axis direction of the lens apparatus 4 so as to be assembled with these panels 8 to 10 and a partition panel (not shown) located on the inside of the central portion panel 9. Theses panels 8 to 12 constitute a hollow housing. The disc drive apparatus 3 is supported with elasticity to the surface of the side of the disc-side panel 8 of the partition panel by four mount-insulators 14 (see FIG. 11). These panels 8 to 12 can be assembled/disassembled at their suitable overlapping portions or through other members by fixing means formed of fixed screws.

The lens apparatus 4 is fixed in the state in which it is incorporated in the upper portion of the outer case 5, and its objective lens 5 is extended through the upper portion of the front panel 11 in the forward direction and thereby exposed to the front surface of the lens apparatus 4. Although not shown, a CCD is located behind the lens apparatus 4 and an electronic viewfinder 16, which shows a specific example of a viewfinder, is located behind the CCD.

An electronic viewfinder 16 is exposed on the upper portion of the outer case 5 and it can be moved forward and backward by a predetermined distance along the optical axis direction of the lens apparatus 4 with a viewfinder moving mechanism. The electronic viewfinder 16 can be rotated around its front side and can be rotated in the upper and lower direction at its rear side. As a result, the electronic viewfinder 16 can be adjusted in angle at an arbitrary angle with a predetermined angular extent (about 90 ° in this embodiment) in the horizontal state in which it becomes parallel to the optical axis of the lens apparatus 4 to the upright state in which its rear portion is elevated. The angle of this electronic viewfinder 16 can be adjusted at any position from the front end portion to the rear end portion of the viewfinder moving mechanism.

Further, the outer case 5 has at its upper portion attached accessory shoe 17 to which accessories such as a video light and an external microphone can be attached detachably. The accessory shoe 17 is located immediately before the electronic viewfinder 16 and the insertion slot of the accessory shoe 17 can be opened as the electronic viewfinder 16 is moved backward. In the state in which this insertion slot of the accessory shoe 17 is opened, the accessory can be attached to the accessory shoe 17. When the electronic viewfinder 16 is moved forward after the accessory was attached to the accessory shoe 17, the insertion slot of the accessory shoe 17 is closed and it becomes impossible to detach the accessory from the accessory shoe 17. A shoe cap 18 serving as a lid member to fill the space portion of the accessory shoe 17 is generally attached to the accessory shoe 17 when the accessory shoe 17 is not in use. The electronic viewfinder 16 and the accessory shoe 17 will be described in detail later on.

A remote control light-receiving portion 20, microphone terminals and a stereo-type microphone 22 are disposed on the front surface of the front panel 11 from above, in that order. The remote control light-receiving portion 20 is a receiving portion by which this image pickup apparatus can be operated under remote control. This remote control light-receiving portion 20 can serve as also an infrared light-emitting portion for emitting infrared rays by which a focus of the lens apparatus 4 can be adjusted automatically. Although not shown, microphone terminals are composed of video terminals and audio terminals, and these terminals are covered with a terminal cover 21 so as to become freely openable and closable.

As shown in FIGS. 5 and 6, the rear panel 12 of the outer case 5 is provided with a battery compartment portion 25 to which the power supply battery 24 is attached detachably. The battery compartment portion 25 is opened in the rear surface and lower surface of the rear panel 12 so that the power supply battery 24 can be inserted into and removed from the battery compartment portion 25 from the oblique lower direction in the rearward. Further, two support metal fitting 26a, 26a are attached to the rear panel 12 to a strap for suspending this image pickup apparatus. Of the two support metal fittings 26a, 26b, one support metal fitting 26a is located on the upper portion of the right-hand side of the rear panel 12a and the other support metal fitting 26b is located on the lower portion of the left-hand side of the rear panel 12.

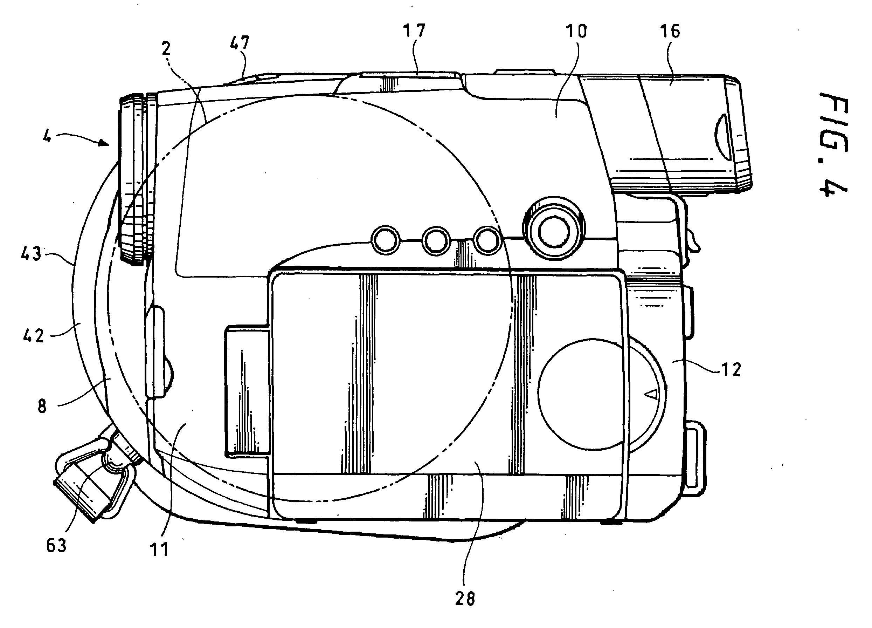

As shown in FIGS. 4 and 5, the display apparatus 28 is attached to the display apparatus-side panel 10 of the outer case 5 such that its attitude can be changed. The display apparatus 28 is composed of a flat plate-like liquid-crystal monitor 29, a panel case 30 to accommodate therein this liquid-crystal monitor 29 and a panel supporting portion 31 for supporting this panel case 30 to the outer case 5 in such a manner that the attitude of the panel case 30 can be changed.

The panel supporting portion 31 includes horizontal rotating function to rotate the panel case 30 around the vertical axis with an angle of approximately 90 degrees in the horizontal direction and forward and backward rotating function to rotate the panel case 30 around the horizontal axis with an angle of approximately 180 degrees in the forward and backward directions. As a result, the display apparatus 28 can be placed in the accommodated state shown in FIGS. 1 to 4, in the state in which the panel case 30 is rotated 90 degrees to oppose the liquid-crystal monitor 29 to the rearward as shown in FIG. 5, the state in which the panel case 30 is rotated 180 degrees from the state shown in FIG. 5 to oppose the liquid-crystal monitor 20 to the forward and the state of the intermediate position as it is desired.

Further, the display apparatus-side panel 10 is provided with an inside operation portion 32 composed of a number of operation buttons covered with the panel case 30 so as to become freely openable and closable and an outside operation portion 33 composed of a plurality of operation buttons disposed on the upper portion of the panel case 30.

As shown in FIGS. 7 and 8, the disc-side panel 8 of the outer case 5 is composed of a side surface portion 8a to which the disc lid 7 is attached and a peripheral edge portion continuing the side surface portion 8a so as to surround the outer edge of the side surface portion 8a. The peripheral edge portion of the disc-side panel 8 is composed of an upper surface portion 8b and a lower surface portion 8c continuing to this side surface portion 8a in the upper and lower direction and a front surface portion 8d and a back surface portion 8e continuing to the side surface portion 8a in the right and left direction. The disc compartment portion 6 is opened on the side of the front surface portion 8d of the side surface portion 8a. A portion extending from substantially the central portion of the upper surface portion 8b of the disc-side panel 8 to substantially the central portion of the lower surface portion 8c through the front surface portion 8d is shaped like substantially a semicircular frame. A reinforcing portion 8f for the purpose of reinforcement is formed on the inside of the substantially semicircular frame-like portion such that it may be extended inwardly.

The disc compartment portion 6 is formed of a constant area having an opening portion to partly expose the disc drive apparatus 3. In this embodiment, the disc compartment portion 6 is formed as an area of a size corresponding to a disc-like recording medium with a diameter of 8 cm. A table rotating apparatus 35 of the disc drive apparatus 3 is located at substantially the central portion of this disc compartment portion 6 and the DVD 2 with the diameter of 8 cm, which shows a specific example of the disc-like recording medium, can be mounted to a turntable 36 located at the central portion of the table rotating apparatus 35. As shown in FIGS. 10 and 11, the table rotating apparatus 35 is fixed to the mechanical chassis 37 which is supported with elasticity to the aforementioned partition panel.

As shown in FIG. 7, the disc compartment portion 6 in which this table rotating apparatus 35 is located is covered with the disc lid 7 so as to become freely openable and closable and which is rotatably supported at its side surface portions to the disc-side panel 8. The disc lid 7 has a shape corresponding to the shape of the disc compartment portion 6 and it includes a flat surface portion 7a that covers the opening side of the disc compartment portion 6 and a peripheral surface portion 7b that continues to substantially the whole periphery of the outer peripheral edge of the flat surface portion 7a. The peripheral surface portion 7b of the disc lid 7 can be fitted into the recess portion of the outer peripheral side of the disc compartment portion 6 of the disc-side panel 8.

As shown in FIG. 8, the disc lid 7 shown in this embodiment is shaped like a shell in which substantially 5/6 (about 300 degrees) of a circumference of an outer peripheral edge is circular (it is sufficient that a circular portion may be greater than approximately 3/4 of the whole circumference of the outer peripheral edge) and a remaining portion is shaped like a rectangular portion 7c composed of straight lines. The rectangular portion 7c has attached thereto a lid rotary shaft portion 39 which serves as a rotation center around which the disc lid 7 can be opened and closed. Although not shown, the lid rotary shaft portion 39 is composed of a support shaft extending through the rectangular portion 7c and a bearing member having a pair of bearing pieces to fixedly support both ends of this support shaft. The bearing member is fixed to the disc-side panel 8, whereby the disc lid 7 can be supported pivotally. This lid rotary shaft portion 39 is provided with a stopper portion for setting a maximum opening angle (for example, 90 degrees) of the disc lid 7.

Such lid rotary shaft portion 39 is attached to the disc-side panel 8 in the state in which the axis direction of the supporting shaft is set to the upper and lower direction. Thus, the disc lid 7 can be rotatably supported to the rear portion of the disc-side panel 8 through the lid rotary shaft portion 39. As a result, the disc lid 7 can be opened with an angle of approximately 90 degrees to the lateral direction in the state in which the front surface of the disc type image pickup apparatus is directed to the front side. The lid rotary shaft portion 39 has attached thereto a spring member by which the disc lid 7 can be located still at an arbitrary opening position in a constant opening angular extent and by which the disc lid 7 can be spring-biased when the disc lid 7 is opened in excess of such opening angle.

The central-portion panel 9 that overlaps with this disc-side panel 8 is composed of an upper surface portion 9a interposed between the upper surface portion 8b of the disc-side panel 8 and the display apparatus-side panel 10 and a front surface portion 9b continuing forward from this upper surface portion 9b and which is interposed between the front surface portion 8d and the front panel 11. A narrow part 42 which becomes a concave portion when it is inclined toward the side of the display apparatus-side panel 10 serving as the inside is set to the portion extending from substantially the central portion of the upper surface portion 9a of this central portion-panel 9 to the lower portion of the front surface portion 8d. The disc-side panel 9 having this narrow part 42 and the arc-like portion of the central portion-panel 9 constitute a grip portion 43 by which a user can held the disc type image pickup apparatus 1 with hand.

A lid opening and closing mechanism 45 of the disc lid 7 is provided between the central portion-panel 9 and the disc-side panel 8. This lid opening and closing mechanism 45 has function to lock the disc lid 7, which has closed the disc compartment portion 6, in the closed state and function to release the locked state of the disc lid 7. This lid opening and closing mechanism 45 will be described in detail later on.

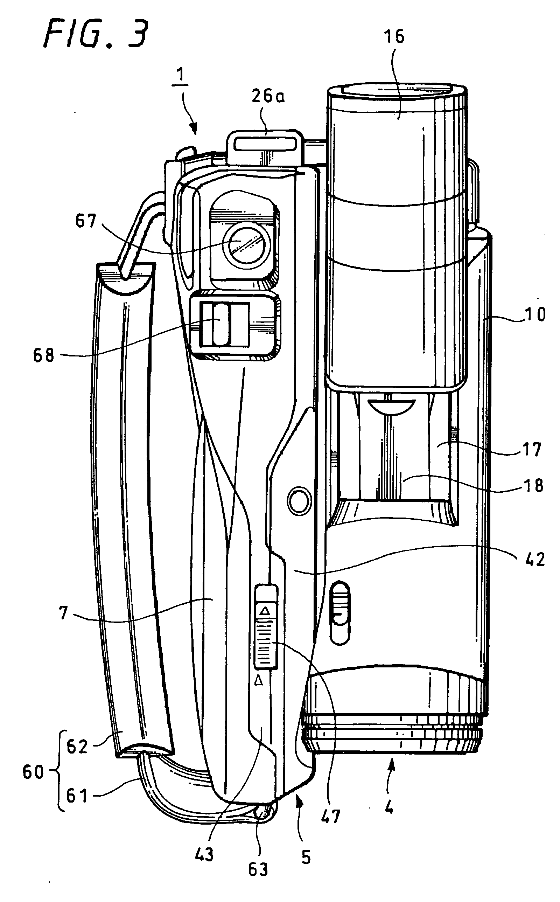

Also, as shown in FIGS. 3 and 6 and the like, a hand strap 60 is attached to the disc-side panel 8 so as to surround the disc lid 7. The hand strap 60 supports the user's hand holding the grip portion 43 serving as the grip portion of the outer case 5 to thereby prevent the user from dropping the disc type image pickup apparatus 1 inadvertently.

This hand strap 60 is composed of a supporting belt 61 fixed at its respective ends to the disc-side panel 8 and a protecting pad 62 attached to the supporting belt 61 so as to contact with the back of the user's hand. One end of the supporting belt 61 is joined to an attachment metal fitting 63 fixed to the front lower portion of the disc-side panel 8 and the other end thereof is inserted into the inside from a through-hole formed somewhere of the rear side of the disc-side panel 8, which is fixed to an attachment metal fitting attached to the inside.

As shown in FIG. 6 and the like, a power supply button 64, a mode switch dial 65 and a recording button 66 are located at the rear portion of the disc-side panel 8. The mode switch button 65 is annular in shape and the power supply button 64 is housed within the hole of the annular mode switch button 65. The power supply button 64 is comprised of a push-push type switch means and the supply of power from the power supply battery 24 is turned on/off by depressions of the power supply button 64. The mode switch dial 65 is used to select operation modes such as recording. When the user rotates the mode switch dial 65, the user is able to switch a desired mode from the three modes of "still picture mode", "moving picture mode" and "monitor/edit mode". Also, the recording button 66 is comprised of a push-push type switch means, and each time the recording button 66 is depressed, shoot of moving picture can be started and stopped repeatedly.

Further, a shutter button 67 and a zoom lever 68 are located on the upper portion of the rear side of the disc-side panel 8. The shutter button 67 is used to shoot a still picture, and each time the shutter button 67 is depressed, the user can shoot one still picture. Also, the zoom lever 68 is used to magnify an image when the user shoots or plays back the image. The user is able to adjust in a stepless fashion a magnification of zooming within a constant range in response to the extent in which the zoom lever 68 is operated.

An ABS (acrylonitrile-butadiene-styrene) resin, for example, is suitable as the material of the disc-side panel 8, the central-portion panel 9, the display apparatus-side panel 10, the front panel 11 and the rear panel 12. However, the above-mentioned material is not limited to the ABS and other engineering plastics can of course be applied to the above-mentioned material. Furthermore, metals such as aluminum alloy other than synthetic resins can be used as the above-mentioned material.

The inside of the outer case 5 is divided in the right and left direction (direction crossing the optical axis of the lens apparatus 4) by the partition panel as mentioned before, whereby a first chamber is formed on the side of the disc lid 7 and a second chamber is formed on the side of the display apparatus. The partition panel is made of a plate-like member and it is fixedly fastened to the inside of the outer case 5 by the fixed screws. While a stainless steep (SUS), for example, is suitable for the material of the partition panel, it is needless to say that steel, aluminum alloy and other metals can be applied to the material of the partition panel. Furthermore, engineering plastics other than metals also can be used as the material of the partition panel.

Although not shown, the disc drive apparatus 3 is accommodated within the first chamber of the outer case 5 and the lens apparatus 4, the control circuit portion and the like are accommodated within the second chamber. For this reason, the partition panel has a plurality of supporting protrusion formed on one surface side thereof to support the disc drive apparatus 3. Also, the partition panel has a plurality of supporting pieces formed on the other surface side thereof to support the lens apparatus 4, a printed circuit board and the like. The control circuit portion is composed of a microcomputer, a storage device (RAM (random-access memory), ROM (read-only memory)), capacitors, resistors and other electronic parts, printed circuit boards on which these electronic parts are mounted, etc.

As shown in FIGS. 11 and 12 and the like, the disc drive apparatus 3 is composed of a mechanical chassis 37 attached to the partition panel, a table rotating apparatus 35 fixed to this mechanical chassis 37, an optical pickup apparatus 71 which shows a specific example of the pickup apparatus, etc. The mechanical chassis 37 is made of a conductive plate material and it is supported with elasticity to the partition panel through a plurality of mount insulators 14 formed of elastic members made of an insulating material.

The mount insulator 14 is formed of a cylindrical rubberlike resilient member and it has an annular groove continuing to the circumferential direction formed somewhere of the axis direction of its outer peripheral surface. The mount insulators 14 of the predetermined number (four mount insulators 14 in this embodiment) are respectively attached to the mechanical chassis 37 by fitting the annular grooves into recess holes formed of insulator receiving portions 70a and insulator receiving members 70b of the mechanical chassis 37. The respective mount insulators 14 can be prevented from being dropped by inserting attachment screws into tip ends of supporting pins after central holes of the mount insulators 14 were fitted into a plurality supporting pins provided on the partition panel.

The mechanical chassis 14 attached to the partition panel through these mount insulators 14 is composed of a frame-like member having a sufficiently large strength. The conductor portion between the mechanical chassis 37 and the partition panel are conducted with each other through a ground member, not shown, so that it can easily discharge static electricity and the like to the outside. The table rotating apparatus 35 mounted on this mechanical chassis 37 is composed of a spindle motor 72 fixed to the mechanical chassis 37 and the turntable 36 fixed to a rotary portion of this spindle motor 72.

The turntable 36 is comprised of an engagement portion 36a fitted into a center hole of the DVD 2 and a mount portion 36a on which the peripheral portion of the center hole is mounted. Further, the engagement portion 36a of the turntable 36 has a plurality of engagement claws 36c provided along its circumferential direction to engage with the peripheral edge portion of the center hole of the DVD 2 to thereby hold the DVD 2. Each engagement claw 36c is spring-biased to the outside of the radius direction under spring force of a spring (not shown). Under spring force of this spring, the DVD 2 is properly positioned and fixed to the engagement portion 36a.

Also, the optical pickup apparatus 71 is composed of a biaxial actuator 74 including a pickup lens 74a opposed to the information recording surface of the DVD 2, a slide member 75 on which this biaxial actuator 74 is mounted, etc. The slide member 75 can be guided and moved by two guide shafts not shown. The two guide shafts are placed in parallel to each other across the spindle motor 72, and the pickup moving apparatus 76 is provided near one guide shaft.

Although not shown, the pickup moving apparatus 76 is comprised of a feed screw shaft engaged with a feed nut attached to the slide member 75 and a feed motor using this feed screw shaft as a rotary shaft thereof. The feed screw shaft is set in parallel to the guide shaft of the optical pickup apparatus 71 and it is pivotally supported to the mechanical chassis 37. In consequence, as the feed screw shaft is rotated by driving the feed motor, the optical pickup apparatus 71 is selectively moved in the direction in which it comes close to the turntable 36 or in the direction in which it comes away from the turntable 36 in response to the rotation direction of the feed screw shaft. The mechanical chassis 37, the table rotating apparatus 35, the optical pickup apparatus 71, the pickup moving apparatus 76 and other relating mechanisms constitute the disc drive apparatus 3.

The partition panel to which the disc drive apparatus 3 having the above-mentioned arrangement is attached is fixed to the predetermined position within the outer case 5, whereby the turntable 36 of the table rotating apparatus 35 and its peripheral portion are properly located on the disc compartment portion 6 of the disc-side panel 8 as shown in FIG. 7. This disc compartment portion 6 is opened and closed by the disc lid 7 and the disc lid 7 is locked and unlocked by the lid opening and closing mechanism 45.

As shown in FIGS. 7, 10 and 11 and the like, the lid opening and closing mechanism 45 is comprised of a lock member 46 fixed to the disc lid 7, an operation member 47 slidably attached to a base plate 51 serving as a member of the disc-side panel 8, a slide member 48 and a rotating lever 49, a motor assembly body 50 for moving the slide member 48 forward and backward, a base plate 51 for supporting the rotating lever 49 and the motor assembly body 50, etc.

The lock member 46 is comprised of a fixing portion fixed to the disc lid 7 and a pair of lock claws 46a, 46b continuously formed as one body with this fixing portion and it is formed of a metal plate member. A pair of lock claws 46a, 46b is located with a predetermined interval and is formed so as to rise from the fixing portion. This fixing portion is fixed to the tip end portion most distant from the lid rotating shaft portion 39 provided on the inner surface of the disc lid 7, whereby the lock member 46 is constructed as one body with the disc lid 7. Further, a pair of lock claws 46a, 46b is located substantially in parallel to each other with a predetermined interval on the peripheral surface portion 7b of the disc lid 7. Hook portions are formed on the respective tip end portions of the lock claws 46a, 46b so as to protrude in the lateral side of the same direction. In this embodiment, the hook portions of a pair of lock claws 46a, 46b are formed so as to protrude in the lower direction.

The operation member 47 is attached to the upper surface portion 8b of the disc-side panel 8 so as to become freely slidable in the forward and backward direction. The operation member 47 includes an operation portion 47a slidably engaged into an oblong groove 52a of the upper surface portion 8b and an arm portion 47b protruded through the upper surface portion 8b into the first chamber. A coil spring 53 is interposed between the arm portion 47b of the operation member 47 and the upper surface portion 8b of the disc-side panel 8 in the state in which it is being compressed. Under spring force of this coil spring 53, the operation member 47 is constantly spring-biased in the forward direction, that is, in the direction in which the lock member 46 is located. When the operation portion 47a is moved in the backward against the spring force of this coil spring 53, the lid opening and closing mechanism 45 starts being opened as will be described later on. Therefore, a detection switch 44 is provided near the operation member 47 to detect the opening operation of the operation member 47 (see FIG. 11)

The base plate 51 is fixed to the inner surface of the side surface portion 8a of the disc-side panel 8 at its vacant space avoiding the disc compartment portion 6 by fixing means composed of fixed screws. This base plate 51 includes a front surface portion 51a opposed to the front surface portion 8d of the disc-side panel 8, a bridge portion 51b continuing to the front surface portion 51a and which is bent 90 degrees so as to oppose the flat surface of the front side of the mechanical chassis 37 and a holding portion 51c continuing to the bridge portion 51b. The holding portion 51c is inclined relative to the front surface portion 51a with an inclination of approximately 45 degrees in order to effectively utilize the vacant space of the first chamber. The motor assembly body 50 is fixed to this holding portion 51c.

As shown in FIGS. 20 to 23, the slide member 48 is slidably supported to the front surface portion 51a of the base plate 51 and the rotating lever 49 also is rotatably supported to the front surface portion 51a of the base plate 51. The slide member 48 is provided with a pair of stopper claws 48a, 48b that can be engaged with and disengaged from a pair of lock claws 46a, 46b of the lock member 46. A pair of stopper claws 48a, 48b is formed so as to rise from the flat plate-like base portion of the slide member 48 in the same direction, and a pair of guide grooves 48c, 48c extended in the sliding direction of the slide member 48 is provided on the base portions of the stopper claws 48a, 48b.

A pair of guide pins 54a, 54a fixed to the front surface portion 51a is slidably engaged with a pair of guide grooves 48c, 48c of the slide member 48. A pair of guide pins 54a, 54a supports the slide member 48 in such a manner that the slide member 48 can be moved in the upper and lower direction of the sliding direction by a predetermined distance. Also, the rotating lever 49 is rotatably supported to substantially a central portion of the base portion of the slide member 48 by a rotary shaft 55 fixed to the front surface portion 51a. The rotary shaft 55 is extended through an oblong hole of the slide member 48 and thereby the movement of the slide member 48 can be prevented from being hindered.

The rotating lever 49 is provided at its one end of the longitudinal direction an input portion 49a with which one lock claw 46b of the lock member 46 is brought in contact. The input portion 49a of this rotating lever 49 is located so as to oppose one lock claw 46b. Also, a spring receiving member 49b is formed on the rotating lever 49 at the other end thereof of the longitudinal direction and one end of a coil spring 56 is engaged with this spring receiving member 49b. The other end of the coil spring 56 is engaged with a spring receiving member 48d provided on the slide member 48 with tension. The slide member 48 is constantly spring-biased in the lower direction under spring force of this coil spring 56. The slide member 48 is provided with a stopper member 48e in order to limit the extent in which the rotating lever 49 can be rotated under spring force of the coil spring 56.

Thus, immediately before the disc lid 7 is closed, a pair of stopper claws 48a, 48b of the slide member 48 that has moved to the uppermost position is opposed to a pair of lock claws 46a, 46b of the lock member 46. When the lock member 46 is moved to the side of the base plate 51 from this state, the inclined surface portions of a pair of lock claws 46a, 46b push the upper end portions of a pair of stopper claws 48a, 48b downwardly. This pushing force downwardly slides the slide member 48 against the spring force of the coil spring 56 to enable the respective lock claws 46a, 46b to pass the respective stopper claws 48a, 48b. As a consequence, the corresponding lock claws 46a, 46b and stopper claws 48a, 48b are meshed with each other and thereby the lock member 46 is locked by the slide member 48. This state is the state shown in FIG. 20.

In order to maintain the engaged state between a pair of lock claws 46a, 46b and a pair of stopper claws 48a, 48b, a pair of insertion holes 57a, 57b into which a pair of lock claws 46a, 46b is inserted is formed on the front surface portion 8d of the disc-side panel 8 as shown in FIGS. 7 to 9. Accordingly, when the disc lid 7 is opened and closed, the lock claws 46a, 46b are inserted into and ejected from these insertion holes 57a, 57b.

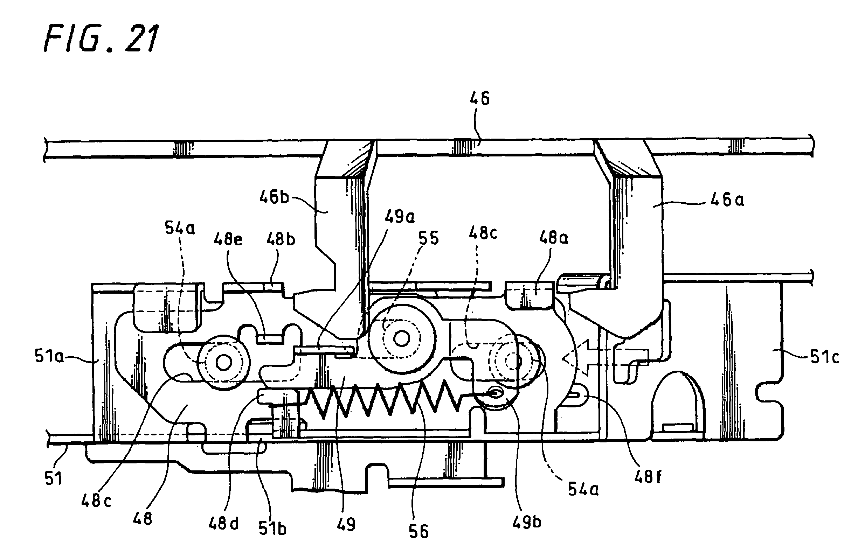

When the lid opening and closing mechanism 45 is changed from the state shown in FIG. 20 to the state shown in FIG. 21 to extend the coil spring 56 against the spring force of the coil spring 56 so that the slide member 48 is moved in the lower direction, a pair of stopper claws 48a, 48b is disengaged from a pair of lock claws 46a, 46b. Thus, the locked state between a pair of lock claws 46a, 46b and a pair of stopper claws 48a, 48b is released so that it becomes possible to open the disc lid 7. Accordingly, the user holds the portion near the lock member 46 of the disc lid 7 to rotate the disc lid 7 to the outside, whereby the disc lid 7 is rotated around the lid rotary shaft portion 39 of the rear portion from the front side to the lateral side. As a result, the disc lid 7 is opened to the front to expose the disc compartment portion 6.

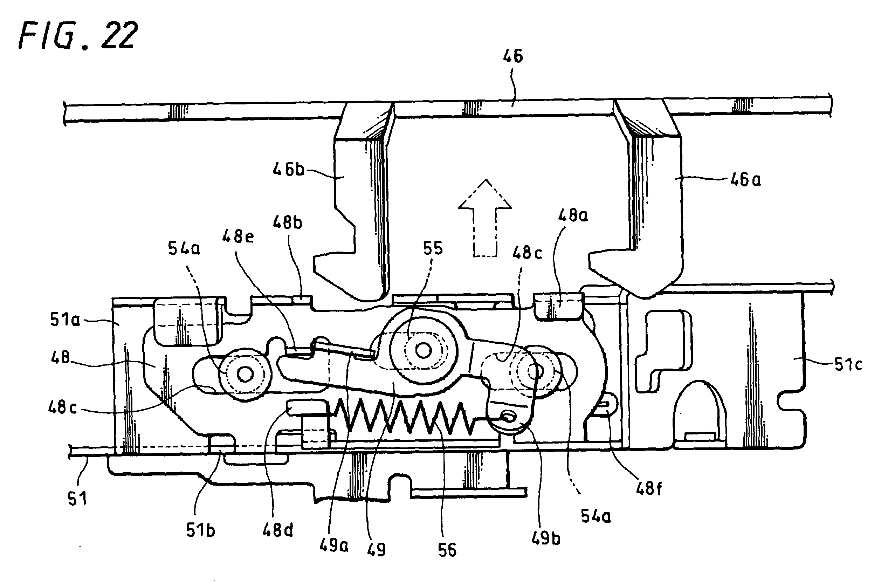

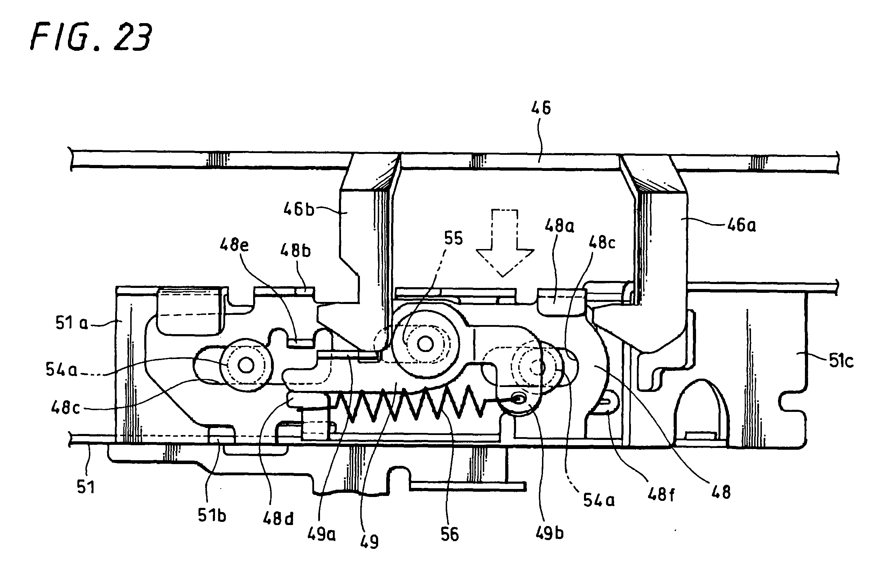

Next, when the disc lid 7 is closed again, as shown in FIG. 22, the disc lid 7 should approach the outer case 5. Then, when a pair of lock claws 46a, 46b is approached to the slide member 48 through a pair of insertion holes 57a, 57b, one lock claw 46b is brought in contact with the input portion 49a of the opposing rotating lever 49. At that time, when the lock claws 46a, 46b are further pushed against the spring force of the coil spring 56, the input potion 49a is disengaged from the stopper member 48e and hence the slide member 48 is set to be free. This state is the state shown in FIG. 23. Then, the slide member 48 is moved upwardly under spring force of the coil spring 56 and thereby a pair of lock claws 46a, 46b is engaged with a pair of stopper claws 48a, 48b. Hence, the lock member 46 is returned to the locked state shown in FIG. 20.

Thus, the slide member 48 is moved in the forward direction under spring force of the spring member 56, whereby a pair of stopper claws 48a, 48b is engaged with a pair of lock claws 46a, 46b. As a result, the lock member 46 is engaged with the slide member 48 by the engagements between the lock claw 46a and the stopper claw 48a and the lock claw 46b and the stopper claw 48b, each of which makes a pair.

The opening operation of the lid opening and closing mechanism 45 is executed by the motor assembly body 50 similarly mounted on the base plate 51. This motor assembly body 50 has the arrangement shown in FIG. 13 and FIGS. 14 to 19. More specifically, the motor assembly body 50 comprises a drive motor 80, a motor housing 81 to house therein this drive motor 80, a rotary cam 82 rotatably attached to the motor housing 81, a swing lever 83 swung by the rotation of the rotary cam 82, etc.

The motor housing 81 includes a motor holding portion 81a into which the drive motor 80 is fitted and a cam supporting portion 81b continuing to this motor holding portion 81a and which rotatably supports the disc-like rotary cam 82. The drive motor 80 is held to the motor holding portion 81a in the state in which its rotary shaft is inserted into the motor housing 81. Although not shown, the motor housing 81 incorporates therein a power converting mechanism for converting rotation force of the rotary shaft of the drive motor 80 into rotation force of the rotary cam 82. As the drive motor 80 is rotated, the rotary cam 82 is rotated in the clockwise direction in FIG. 14 by this power converting mechanism.

As shown in FIGS. 14 to 19, the rotary cam 82 has on its upper surface provided a cam pin 84 to swing the swing lever 83 and which also moves the slide member 48 in the forward and backward direction. The cam pin 84 is rotated around the rotary shaft 82a of the rotary cam 82 and an operation portion 83a of the swing lever 83 and an operation portion 48f of the slide member 48 are located on the trace along which the cam pin 84 is rotated.

The swing lever 83 is supported by a pivot 85 erected on the motor housing 81 in such a manner that it can freely swing on the surface of the motor housing 81 in the direction of plane. This swing lever 83 has at its one end provided a bifurcated operation portion 83a. The operation portion 83a of the swing lever 83 is composed of a first cam protrusion 86a and a second cam protrusion 86b formed on both end portions of the swing lever 83. The swing lever 83 can be swung around the pivot 85 by force inputted from these first and second cam protrusions 86a, 86b.

The swing lever 83 has at its end portion opposite to the operation portion 83a provided an operation portion 86c for energizing/de-energizing a detection switch 87 for controlling operation of the drive motor 80 and a spring receiving member 86d for fixing one end of a torsion spring 88. The torsion spring 88 controls motions of the swing lever 83 and the other end thereof is fixed to a cover member 89. The cover member 89 is adapted to cover the intermediate portion of the swing lever 83 to prevent the swing lever 83 from being dropped so that stable swing motions of the swing lever 83 can be maintained. The cover member 89 is fixed to the motor housing 81. The detection switch 87 is installed so as to oppose the operation portion 86c of the swing lever 83 in the state in which it is mounted on a flexible wiring board 90. An operation member 87a of the detection switch 87 is energized and de-energized in response to the swing state of this swing lever 83 to thereby control driving of the drive motor 80.

The operation portion 48f of the slide member 48 is formed so as to project in the opposite direction on the opposite side of the side on which a pair of stopper claws 48a, 48b are erected. When the cam pin 84 of the rotary cam 82 pushes the operation portion 48f of the slide member 48, the slide member 48 can be slid in the upper and lower direction in which a pair of stopper claws 48a, 48b is arranged.

In the motor assembly body 50 having the above-mentioned arrangement, the slide operation of the slide member 48 is executed as follows, for example. FIGS. 14 to 19 are diagrams used to explain operations of the motor assembly body 50. FIG. 14 is a diagram showing the ordinary initial state. In this initial state, the cam pin 84 of the rotary cam 82 is in contact with the first cam protrusion 86a of the swing lever 83. Thus, the swing lever 83 is set to the position at which the swing lever 83 is swung most around the swinging center in the clockwise direction. As a consequence, the operation portion 86c pushes the operation member 87a to energize the detection switch 87. Also, the slide member 48 is located at the upper position at which it comes closest to the motor assembly body 50 and its operation portion 48f is located at the trace along which the cam pin 84 is rotated. Accordingly, the lid opening and closing mechanism 45 is placed in the locking state in which it locks the lock member 46 or it is placed in substantially the similar state.

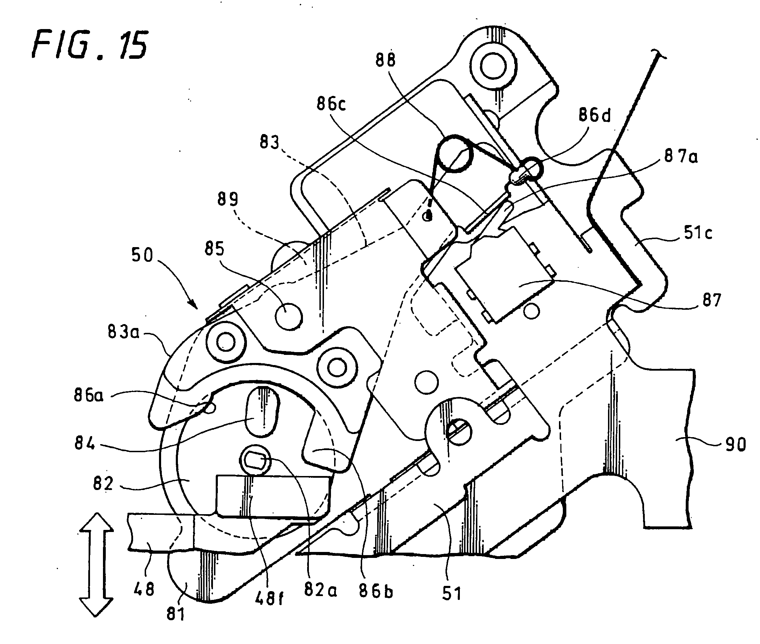

When the user slides the operation member 47 in the opening direction (direction from the front side to the back side of the outer case 5) in the state shown in FIG. 14, the above-described operation of the operation member 47 is detected by the detection switch 87 and a control signal based upon the detected signal from the detection switch 87 is supplied to the drive motor 80. As a result, the drive motor 80 starts being driven to rotate the rotary cam 82 in the clockwise direction and hence the cam pin 84 is disengaged from the first cam protrusion 86a. Consequently, although the rotary cam 82 is changed from the state shown in FIG. 14 to the state shown in FIG. 15, the swing lever 83 is maintained in the initial state under spring force of the torsion spring 88 so that the energized state of the detection switch 87 can be maintained, the locked state of the slide member 48 also being maintained.

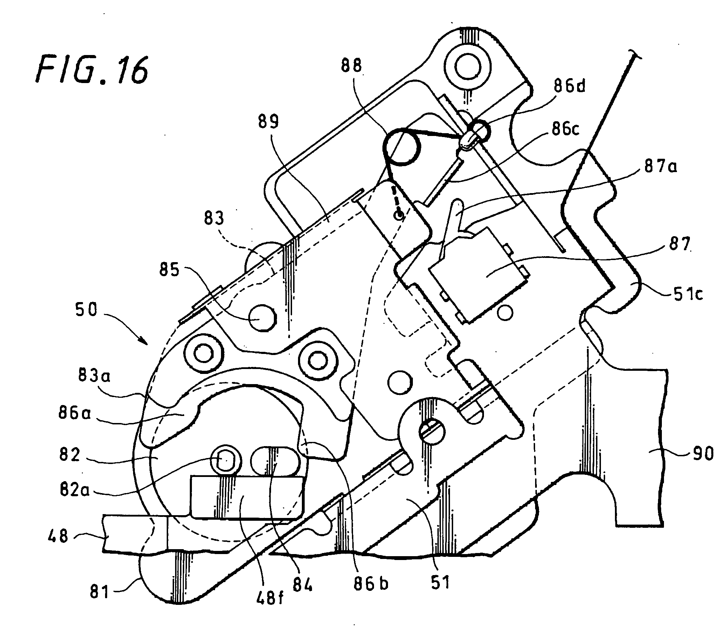

Further, when the rotary cam 82 is rotated in the clockwise direction and the cam pin 84 contacts and pushes the second cam portion 86b as shown in FIG. 16, the swing lever 83 is swung around the pivot 85 in the counter-clockwise direction against the spring force of the torsion spring 88. As a result, the operation portion 86c of the swing lever 83 is disengaged from the operation member 87a and the detection switch 87 is changed from the energized state to the de-energized state. When the detection switch 87 is changed from the energized state to the de-energized state, driving of the drive motor 80 is not stopped and the rotation of the drive motor 80 can be continued. Further, the locked state of the slide member 48 can be maintained until the cam pin 84 is brought in contact with the operation portion 48f.

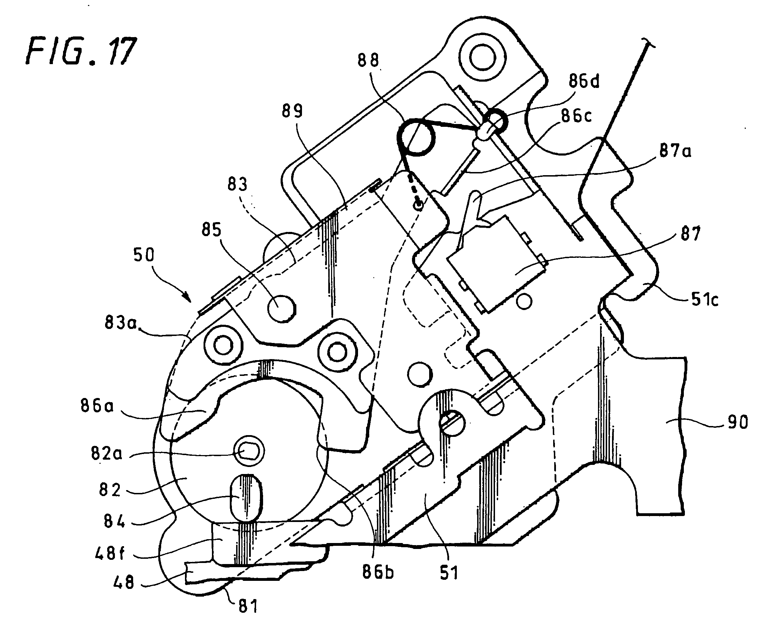

Next, when the rotary cam 82 is changed from the state shown in FIG. 16 to the state shown in FIG. 17, since the cam pin 84 pushes the operation portion 48f, the slide member 48 is slid in the lower direction (in the direction in which the slide member 48 comes away from the motor assembly body 50) against the spring force of the coil spring 56. As a result, as mentioned hereinbefore, the lock member 46 is released from being locked by the slide member 48 and the disc lid 7 becomes able to open. At that time, the state in which the swing lever 83 is swung most in the counter-clockwise direction can be maintained under spring force of the torsion spring 88.

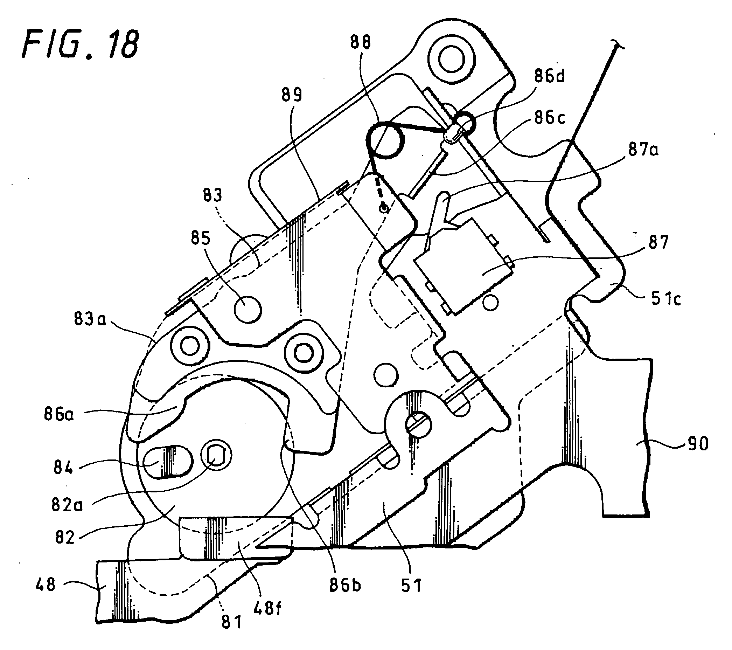

Subsequently, when the rotary cam 82 is changed from the state shown in FIG. 17 to the state shown in FIG. 18, although the cam pin 84 is detached from the operation portion 48f, since the stopper member 48e of the slide member 48 is engaged with the input portion 49a of the rotating lever 49, the state in which the slide member 48 is located at the lower end can be maintained. Also, the swing lever 48 is similarly maintained in the state in which it is swung most in the counter-clockwise direction under spring force of the torsion spring 88.

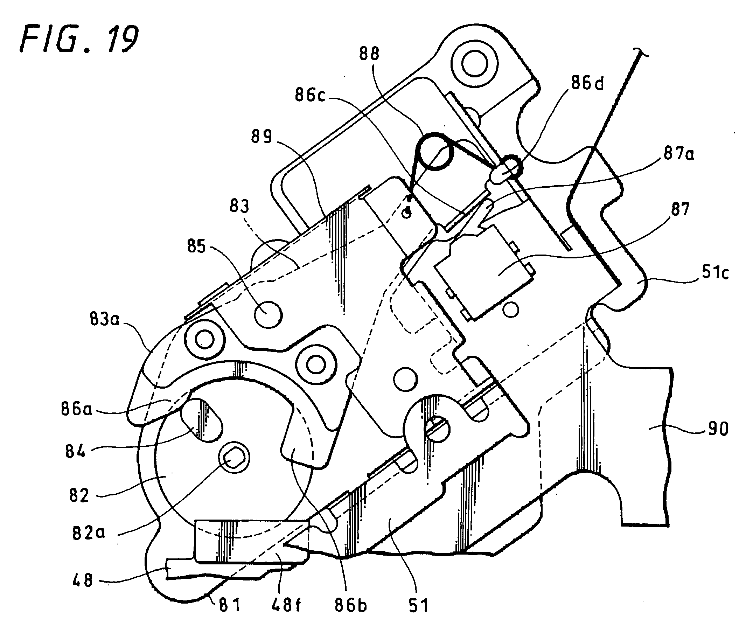

Next, when the rotary cam 82 is changed from the state shown in FIG. 18 to the state shown in FIG. 19, the cam pin 84 comes in contact with the first cam protrusion 86a of the swing lever 83 to push the first cam protrusion 86a to the outside so that the swing lever 83 is swung around the pivot 85 in the clockwise direction against the spring force of the torsion spring 88. Thus, the operation portion 86c of the swing lever 83 comes in contact with the operation member 87a of the detection switch 87 to push the operation member 87a so that the detection switch 87 is switched from OFF to ON. The supply of power to the drive motor 80 is stopped based upon a switching signal obtained when the detection switch 87 is turned ON and the rotation of the rotary cam 82 is stopped as the drive motor 80 is stopped.

Then, the rotary cam 82 is returned from the state shown in FIG. 19 to the state shown in FIG. 14 and the aforementioned operations shown in FIGS. 14 to 19 are repeated.

According to the disc type image pickup apparatus 1 having the above-mentioned arrangement, the disc lid 7 can be opened and closed as follows, for example. First, the power supply button 64 of the disc type image pickup device 1 is depressed to energize the disc type image pickup device 1.

When the disc type image pickup device 1 at that time is placed in the state in which the disc lid 7 is closed as shown in FIGS. 1 to 4, a pair of lock claws 46a, 46b of the lock member 46 fixed to the disc lid 7 is entered into the outer case 5 through a pair of insertion holes 57a, 57b formed on the disc-side panel 8 and engaged with a pair of stopper claws 48a, 48b provided on the slide member 48 of the lid opening and closing mechanism 45, thereby being locked. FIGS. 14 and 20 show the state of the lid opening and closing mechanism 45 at that time. In this case, since the state in which the lock member 52 is locked by the slide member 48 is held, the user is unable to open the disc lid 7.

In the state in which the disc lid 7 is closed, when the user operates the operation member 47 disposed on the grip portion 43 of the outer case 5, opening operation of the disc lid 7 is started. First, when the user slides the operation member 47 in the rearward which is the opening direction, the opening operation of the disc lid 7 is detected by the detection switch 44 disposed near the operation member 47. The driving of the drive motor 80 of the motor assembly body 50 is started based upon the detected signal from this detection switch 44. Then, when the rotary cam 82 is changed from the state shown in FIG. 15 through the state shown in FIG. 16 to the state shown in FIG. 17 as the drive motor 80 is driven, the cam pin 84 of the rotary cam 82 contacts with the operation portion 48f formed on the upper portion of the slide member 48 and presses the operation portion 48f.

When the operation portion 48f is pushed by the cam pin 84 as described above, the slide member 48 is slid in the direction in which it comes away from the rotary cam 82 (in the lower direction of the disc type image pickup apparatus 1 in this embodiment). As the slide member 48 is slid, a pair of stopper claws 48a, 48b is disengaged from a pair of lock claws 46a, 46b and thereby the state in which the lock member 46 is locked by the slide member 48 is released. FIGS. 17 and 21 show this lock released state of the lock member 46.

As a result, since the lock member 46 is set to the free state, the disc lid 7 is slightly opened under spring force of an opening spring (not shown) provided on the lid rotary shaft portion 39 (this opening spring may be provided near the lid rotary shaft portion 39) which becomes the rotation center of the disc lid 7. FIG. 22 shows the opened state of this disc lid 7. Thus, the user becomes able to open the disc lid 7 with hand. Accordingly, when the user opens the disc lid 7 to the outside with hand, as shown in FIGS. 7 to 9, the disc lid 7 can be opened. Thus, the DVD 2 loaded onto the turntable 36 located at substantially the central portion of the disc compartment portion 6 is exposed so that the user becomes able to easily load the DVD 2 to the turntable 36 or to unload the DVD 2 from the turntable 36.

When this disc lid 7 is opened, while the disc lid 7 is opened around the rear portion thereof from the front side to the lateral side, the hand strap 60 can escape in the lower direction. Therefore, the hand strap 60 can be prevented from disturbing the opening operation of the disc lid 7 and hence the disc lid 7 can be opened smoothly. In addition, as compared with an image pickup apparatus of the type in which a disc lid is opened from the upper side to the lower direction, the angle with which the disc lid 7 is opened can be increased (opening and closing angle of the disc lid 7 can be set to larger than 90 degrees). Therefore, the disc lid 7 can be prevented from disturbing the exchange of the disc and hence the user becomes able to exchange the disc with ease.

When the disc lid 7 is closed from the state in which the disc lid 7 is opened as shown in FIG. 8 and so on, the disc lid 7 is approached to the disc-side panel 8 and then the disc compartment portion 6 is closed. At that time, a pair of lock claws 46a, 46b of the lock member 46 fixed to the inside of the disc lid 7 enters a pair of insertion holes 57a, 57b of the disc-side panel 8 to push the input portion 49a of the rotating lever 49 with pressure to rotate the input portion 49a of the rotating lever 49 to the rearward. Consequently, as shown in FIG. 23, since the input portion 49a of the rotating lever 49 is disengaged from the stopper member 48e of the slide member 48, the slide member 48 is slid to the side of the motor assembly body 50 under spring force of the coil spring 56.

Thus, a pair of stopper claws 48a, 48b of the slide member 48 is engaged with a pair of lock claws 46a, 46b of the lock member 46. As a result, the lock member 46 is engaged with and held by the slide member 48 and hence the disc lid 7 is closed in the state in which the lid opening and closing mechanism 45 is locked. FIGS. 14 and 20 show this locked state of the disc lid opening and closing mechanism 45.

Also, as shown in FIGS. 24 to 26, the electronic viewfinder 16 is attached to the disc type image pickup apparatus 1 through a viewfinder moving mechanism 160. The viewfinder moving mechanism has function to slide in the front and back direction of the disc type image pickup apparatus 1 and tilt function such that its rear portion can be rotated around the front end portion in the upper and lower direction. Thus, the electronic viewfinder 16 can be moved in the front and back direction of the disc type image pickup apparatus 1 within a predetermined range and it can also be rotated with a predetermined angle in the front and back direction at the arbitrary position in which it was moved. In this tilt function shown in this embodiment, the viewfinder moving mechanism 160 can be rotated between the horizontal position parallel to the optical axis of the lens apparatus 4 and the vertical position at which it is rotated from the horizontal position to the upper direction with an angle of approximately 90 degrees.

The electronic viewfinder 16 includes a housing composed of a base cabinet 161, a finder cabinet 162 and an eyecup cabinet 163 which are joined together. The base cabinet 161 is joined to one side of the viewfinder cabinet 162 and the eyecup cabinet 163 is joined to the other side of the viewfinder cabinet 162. An electronic display apparatus 164 is housed within the base cabinet 161 and an eyepiece and a visibility adjusting mechanism are housed within the eyecup cabinet 163, although not shown. The electronic display apparatus 164 can be properly focused by visibility adjustment of the visibility adjusting mechanism. Thus, the user can properly focus the object through the eyepiece portion 16a set to the tip end portion of the eyecup cabinet 163.

The viewfinder moving mechanism 160 has an arrangement shown in FIGS. 27 to 39. More specifically, the viewfinder moving mechanism 160 is composed of a holder 166 having a U-like cross-section, a slider 167 and a sliding plate 168 slidably held within the concave portion of this holder 166, a shielding plate 169 fixed to the slider 167, etc.

As shown in FIGS. 32, 33 and the like, the holder 166 is composed of a holder main body 170 and an inner mount body 171 having U-like cross-sections, and the inner mound body 171 is mounted into the U-like concave portion of the holder main body 170. More specifically, as shown in FIG. 37, the holder main body 170 is composed of a rectangular bottom surface portion 170a and side surface portions 170b, 170c continuing to both side surfaces of the width direction of this bottom surface portion 170a so as to rise. A guide oblong hole 172 is formed at substantially the central portion of the bottom surface portion 170a so as to continue in the longitudinal direction.

Further, a square recess portion 173 is formed on the bottom surface portion 170a at its one end in the longitudinal direction and a flexible wiring board connected to the electronic display apparatus 164 is inserted into this recess portion 173. A positioning stepped portion 174a for properly positioning the inner mount body 171 is formed on the bottom surface portion 170a at the other end thereof in the longitudinal direction. Also, supporting portions 174b, 174c for fixedly supporting the holder 166 to the outer case 5 are provided on the side surface portions 170b, 170c. Reference numerals 174d, 174e shown in FIG. 32 denote supporting portions which support a bridging plate, not shown.

In a like manner, the inner mount body 171 includes a bottom surface portion 171a and left and right side surface portions 171b, 171c. A positioning portion 175a that is engaged with the positioning stepped portion 174a and a corner frame portion 175b that is engaged with the recess portion 173 are provided on the bottom surface portion 171a of the inner mount body 171. Further, a pair of slits 176 is provided on both side portions of the bottom surface portion 171a in such a manner that one end thereof is opened to the end portion of the side of the recess portion 173 and that the other end thereof is extended near the end portion of the side of the positioning portion 175a. A strip-like bottom surface portion 171a is formed within the inner mount body 171 by a pair of slits 176. Then, a work hole 171d for fixing a guide pin 186, which will be described later on, by caulking, is provided on the front portion of the corner frame portion 175b of the bottom surface portion 171a.

As shown in FIG. 32 and the like, guide rails 177 are formed on the inner surfaces of the left and right side surface portions 171b, 171c of the inner mount body 171 so as to be extended in the longitudinal direction. The guide rails 177 are engaged with guide grooves 178 formed at both side surfaces of the slide plate 168, whereby the slide plate 168 is supported to the inner mount body 171 so as to become slidable in the longitudinal direction. The slide plate 168 can be slid in the longitudinal direction by the shielding plate 169 in gang with the movement of the slider 167 within a predetermined extent. Then, the engagement portion 168a for limiting the movement of the slide plate 168 is protruded on the upper surface of the slide plate 168.

As shown in FIGS. 32, 33 and the like, the slider 167 is comprised of a slider main body 180 having a U-like cross-section, a joint body 181 having a similar U-like cross-section and a shielding plate 169. As shown in FIG. 38, the slider main body 180 is composed of a bottom surface portion 180a and side surface portions 180b, 180c continuing to both side portion of this bottom surface portion 180a, and a square recess portion 180d with which the corner frame portion 175 o the inner mount body 171 is engaged is formed on the bottom surface portion 180a. Slide sheets 187 for smoothly sliding the slider 167 are respectively attached to lower surfaces of both side portions of the bottom surface portion 180a.

Also, the left and right side surface portions 180b, 180c are provided with bearing members 180a which are projected in the opposite side of the bottom surface portion 180a. Each bearing portion 180e has lock portions 182b, 182c, 182d provided at three places to lock the bearing hole 182a and a joint body 181 at predetermined positions. Further, each bearing member 180e is provided with a stopper portion 182e to limit the rotation amount of the joint body 181.

The joint body 181 is composed of a joint portion 181a and supporting portions 181b, 181c continuing to both sides of this joint portion 181a. The base cabinet 161 is fixed to the joint portion 181a by fixing means such as fixing screws. Each of the supporting portions 181b, 181c includes bearing hole 184a and a stopper member 184b. After a pair of supporting portions 181b, 181c was disposed on the insides of a pair of bearing members 180e, 180e, shaft pins 185 are inserted into the overlapping bearing holes 182a and 184a and the joint body 181 is joined to the slider main body 180 by caulking so as to become freely rotatable. Then, plate springs (not shown for giving proper resistance when the joint body 181 can be rotated are mounted between the respective bearing members 180e, 180e and the supporting portions 181b, 181c.

As shown in FIG. 32, the aforementioned slide plate 169 is located across the slider main body 180 so as to close the opening portion between the left and right side surface portions 180b, 180c and thereby fixed thereto as one body. Both end portions of the shield plate 169 are located so as to oppose the outsides of the respective side surface portions 180b, 180c and formed as plate spring 169a. The plate springs 169a are urged against the inner surface of the inner mount body 171 to generate resistance of proper strength.

A through-hole 180f is formed at substantially the central portion of the bottom surface portion 180a of the slider main body 180. One end of the guide pin 186 is penetrated through this through-hole 180f. The other end of the guide pin 186 is penetrated through the guide oblong hole 172 of the holder main body 170 and both ends of the guide pin 186 are extended by caulking, whereby the slider main body 180 is slidably attached to the holder main body 170. At that time, the bottom surface portion 180a of the slider main body 180 can be made inconspicuous when it is inserted into the lower side of the bottom surface portion of the bottom surface portion 180a of the inner mount body 171. This can be realized when the two side surface portions 180b, 180c of the slider main body 180 are extended through a pair of slits 176, 176 provided on the bottom surface portion 180a of the inner mount body 171 and projected upwardly.

Reference numeral 188 shown in FIGS. 32 and 33 denotes a pin cover for protecting the guide pin 186. An escape groove 188a has an escape groove 188a formed on its inner surface to avoid it from contacting with the head portion of the guide pin 186. This pin cover 188 is fixed to the bottom surface of the holder main body 170 by a fixing means such as adhesives. Also, reference numeral 191 denotes a flexible wiring board cover for protecting the flexible wiring board 190. This flexible wiring board cover 191 is fixed to the bottom surface of the holder main body 170 through a spacer 192 fixed to the base portion thereof by a fixing means such as adhesives. The spacer is formed of an adhesive paper having a proper thickness to protect the flexible wiring board 190.

While metals such as stainless steel and steel may be used as suitable materials of the holder main body 170, the slider main body 180, the joint body 181 and the shielding plate 169, the present invention is not limited thereto and engineering plastics having proper strength and rigidity can be used. Also, while ABS (acrlyonitrile-butadiene-styrene) resin and other engineering plastics, for example, may be used as suitable materials of the inner mount body 171, the slide plate 168, the pin cover 188 and the flexible wiring board cover 191, the present invention is not limited thereto and metals such as stainless steel and steel can be used. A cost and the number of processing can be decreased by contracting a polyester (PET (polyethylene terephthalate), PBT (polybutadiene terephthalate)) sheet and polycarbonate (PC) sheet, for example. In particular, in the case of the pin cover 188 and the flexible wiring board cover 191, a mold resin material is not used but the polyester sheet and the polycarbonate sheet can be increased in strength and decreased in thickness by contracting these sheets.

The viewfinder moving mechanism 160 having the above-mentioned arrangement can be assembled as follows, for example. The joint body 181 and the shielding plate 169 are attached to the slider main body 180. That is, a pair of supporting portions 181b, 181c of the joint body 181 and the plate spring are interposed between a pair of bearing members 180e, 180e of the slider main body 180 and they are joined by the shaft pins 185 so as to become freely rotatable. Then, the shielding plate 169 is attached to the slider main body 180. Thus, the slider 167 is assembled as shown in FIGS. 32 and 33 and FIGS. 36A to 36C.

Next, the slider 167 is assembled on the holder main body 170. In that case, the bottom surface portion 180a of the slider main body 180 is inserted into the lower portion of the bottom surface portion of the inner mount body 171 and a pair of side surface portions 180b, 180c is fitted into a pair of slits 176, 176 formed on the bottom surface portion of the inner mount body 171, whereafter the guide pin 186 is inserted from the work hole 171d of the bottom surface portion 171a and fixed by caulking. Thus, as shown in FIG. 35A, the slider 167 is joined to the holder main body 170 by the guide pin 186 so as to become freely slidable. Further, as shown in FIG. 35B, the pin cover 188 is fixed to the bottom surface of the holder main body 170 so as to hide the head portion of the guide pin 186. As a result, as shown in FIG. 28, FIGS. 30A to 30C and FIGS. 31A to 31C, the viewfinder moving mechanism 160 is assembled.

The electronic display apparatus 164 is mounted on the thus assembled viewfinder moving mechanism 160. FIG. 27 shows this state. At that time, the joint body 181 of the viewfinder moving mechanism 160 is fixed to the base cabinet 161. Then, the flexible wiring board 190 connected to the electronic display apparatus 164 is withdrawn on the upper surface of the inner mount body 171, inserted into the opening portion 193 of the rear portion and thereby laid along the lower surface of the holder main body 170. At that time, the end portion of the side of the electronic display apparatus 164 of the flexible wiring board 190 is supported by a reinforcing plate with a load so that the connector can be prevented from being applied with a load.

Further, as shown in FIG. 29, the tip end portion of the flexible wiring board 190 is projected to the lateral direction from the intermediate portion of the flexible wiring board cover 191. Thus, even when the connector insertion position is moved slightly, since the tip end portion of the flexible wiring board 190 can be moved, stress can be prevented from being applied to the connector insertion position. In addition, since the tip end portion of the flexible wiring board 190 is sandwiched between the pin cover 188 and the flexible wiring board cover 191 and it can be moved within a constant clearance, the flexible wiring board 190 can be prevented from being caught with other assemblies and it can also be prevented from being rubbed and damaged.

The accessory shoe 17 of which insertion slot 230 is opened and closed by the viewfinder moving mechanism 160 has an arrangement shown in FIG. 24. That is, the accessory shoe 17 is composed of a shoe main body 231 formed of a single metal plate member and a connector member 232 integrally attached to the inside of the shoe main body 231.

The shoe main body 231 includes a bottom surface portion 231a formed as a square shape, a pair of side surface portions 231b continuing to both sides of this bottom surface portion 231a, a pair of upper surface portions 231c continuing to the respective side surface portions 231b and a stopper portion 231d continuing to the side of the insertion slot 230 of each upper surface portion 231c. The side surface portion 231b is formed by bending the upper portion of this side surface portion 231b with an angle of 90 degrees in the horizontal direction. Then, the stopper portion 231d is formed by bending the end portion of the side of the insertion slot 230 of the upper surface portion 231 with a proper angle (for example, 15 to 45 degrees) in the lower direction.

Also, the connector member 232 is comprised of a block-like connector main body 233, a plurality of connector terminals housed within this connector main body 233 and a slide cover 235 for opening and closing a plurality of connector terminals, etc. A flexible wiring board 237 is connected to the connector terminal 234 and the connector terminals 234 are connected to the power supply such as the power supply battery 24 through the flexible wiring board 237. Thus, a foot member of an accessory such as a flash apparatus is inserted into the insertion slot 130 and the slide cover 235 is opened by the foot member to allow the connection terminal to come in contact with the connector terminal 234, whereby power can be supplied to the accessory mounted on the accessory shoe 17.

FIG. 40 shows a flash apparatus 240 which shows a specific example of the aforementioned accessory. This flash apparatus 240 includes a foot member which is engaged with the accessory shoe 17. The foot member 241 is provided with an electric contact and includes a terminal 242 which comes in contact with the electric contact to enable it to be electrically connected to the flash apparatus 240. The flash apparatus 240 can be inserted into the accessory shoe 17 only in the predetermined direction and a receiving member 243 is fixed to this foot member 241. A main body portion 244 of the flash apparatus 240 is rotatably supported to the receiving member 243. The flash apparatus 240 includes a rotation mechanism 245 a click mechanism interposed between the receiving member 243 and the main body portion 244 by which rotation of the main body portion 244 can be temporarily stopped at the predetermined position and the rotation of the main body portion 244 can be stopped when the main body portion 244 is rotated 180 degrees from the predetermined position.

Further, the flash apparatus 240 includes a lock mechanism for locking the position of the foot member 241 relative to the accessory shoe 17. This lock mechanism is composed of a presser member and an action member. A spiral-shaped cam groove is formed on one of these members and an engagement protrusion which is engaged with a cam groove is formed on the other member. The action member is moved in the predetermined direction, whereby the presser member is moved to lock the position of the foot member 241. The presser member of the lock member is provided with a contact member having large frictional force. When this contact member is brought in contact with the accessory shoe 17, the foot member 241 can be locked by frictional force generated between the contact member and the accessory shoe 17. A synthetic rubber is suitable for use as the material of the contact member.

The flash apparatus 240 having the above-mentioned arrangement can be mounted on the disc type image pickup apparatus 1 as follows, for example. First, the electronic viewfinder 16 in the state shown in FIG. 24 is withdrawn in the rearward, whereby an insertion space portion 246 into which the foot portion 241 of the flash apparatus 240 can be inserted is formed on the side of the electronic viewfinder 16 which is the rearward of the accessory shoe 17. Accordingly, the foot portion 241 is inserted into this insertion space portion 246 and the foot portion 241 is inserted into the insertion slot 230 of the accessory shoe 17. In that case, as the foot portion 241 is inserted into the insertion slot 230 of the accessory shoe 17, the slide cover 235 is opened and the terminal 242 is brought in contact with the connector terminal 234 of the connector member 232.

As a result, electric power is supplied from the connector terminal 234 through the terminal 242 to the flash apparatus 240. Thus, it becomes possible for a user to shoot a picture with the disc type image pickup apparatus 1 using the flash apparatus 240. In that case, the upper surface portion 231c of the accessory shoe 17 is held by the rotating mechanism 245 and thereby fixed firmly. Consequently, it is possible to prevent the flash apparatus 240 from being inadvertently dropped as the fastening portion of the flash apparatus 240 is loosened. FIG. 41 shows the state in which the disc type image pickup apparatus 1 is placed in this state at that time.

Also, since the viewfinder moving mechanism 160 has tilt function independently of the aforementioned slide function, the electronic viewfinder 16 of the disc type image pickup apparatus 1 can incline its eyepiece portion 16a in the upper direction. FIG. 42 shows the state in which the electronic viewfinder 16 is inclined with an angle of approximately 45 degrees in the upper direction. Further, FIG. 43 shows the state in which the electronic viewfinder 16 can be inclined with an angle of approximately 90 degrees in the upper direction so that the user can look into the eyepiece portion 16a from substantially right over. The view angle of the electronic viewfinder 16 can be varied, thereby making it possible for the user to shoot a picture with various postures.

As mentioned hereinbefore, according to the disc type image pickup apparatus 1 in which the disc lid 7 can be opened and closed, the user can shoot an object by the disc type image pickup apparatus 1 held with hand in the state shown in FIG. 10. In this case, the disc-side panel 8 of the outer case 5 and the portion of the disc lid 7 form the grip portion by which the user can grip the disc type image pickup apparatus 1. In addition, since substantially the whole of such grip portion is substantially circular, it becomes possible for the user to shoot the object with the large grip portion stably.

Also, since the narrow part 42 is set on the inside of the grip portion 43, the user can hold the narrow part 42 with the finger tips of the index finger to the little finger and hence sufficiently large gripping force can be generated. Further, since the lid opening and closing mechanism 45 is accommodated within the space area set on the inside of the grip portion 43, it became possible to efficiently use the space area within the outer case 5. Therefore, the outer case 5 can be miniaturized by removing the vacant area within the outer case 5. As a result, it became possible to miniaturize the whole of the apparatus.

Furthermore, as shown in FIGS. 3 and 4 and the like, since the front portion of the grip portion 43 is projected forward from the front portion of the lens apparatus 4, while the size of the disc side of the disc type image pickup apparatus 1 is being made corresponding to the size matched with the standards of the recording medium considering the standards of the disc-like recording medium used herein, the size of the lens apparatus side can be reduced as much as possible and the whole of the apparatus can be miniaturized. In particular, when a DVD having a diameter of 8 cm, a CD-ROM and other disc-like recording mediums are applied to the recording medium, as shown in FIG. 10, the size of the whole of the disc type image pickup apparatus 1 can be set to the size corresponding to the specification of a palm-held type image pickup apparatus. More specifically, according to the present invention, the camera portion is smaller than the grip portion and the whole of the disc type image pickup apparatus 1 can be miniaturized. Thus, the disc type image pickup apparatus 1 according to the present invention is suitable for use as the application to an image pickup apparatus using a small disc as a recording medium.

The present invention is not limited to the aforementioned embodiments shown in the sheets of drawings and various modifications could be effected therein without departing from the gist of the present invention. For example, while the present invention is applied to the disc type image pickup apparatus using the DVD as the recording medium, the present invention is not limited thereto and can be applied to disc-like recording mediums of other recording systems such as a magneto-optical disc and a magnetic disc. In this case, pickup apparatus for use with the above-mentioned magneto-optical disc and the magnetic disc may be a magneto-optical pickup apparatus, a magnetic pickup apparatus and the like in response to the kind of the recording mediums.

Having described preferred embodiments of the invention with reference to the accompanying drawings, it is to be understood that the invention is not limited thereto and that various changes and modifications could be effected therein by one skilled in the art without departing from the spirit or scope of the invention as defined in the appended claims.

## Claims

1. An image pickup apparatus comprising:
a table rotating apparatus for rotating a turntable on which a disc-like recording medium is detachably attached;
a pickup apparatus capable of recording an information signal of an image corresponding to light of an object inputted through at least a lens apparatus on said disc-like recording medium rotated by said table rotating apparatus;
an outer case including a disc compartment portion for housing therein said table rotating apparatus and said pickup apparatus and in which said turntable is located;
a disc lid attached to said outer case so as to become freely openable and closable to cover said disc compartment portion; and
a rotary shaft portion is provided on the rear portion of the side surface of said outer case to rotatably support said disc lid and said disc lid can be opened to the front so that said disc lid can be rotated around said rotary shaft portion in the lateral direction.

2. An image pickup apparatus according to claim 1, wherein said disc lid has an outer periphery of which substantially 3/4 portion is circular and an axis line of said rotary shaft portion is extended in the upper and lower direction and attached to the rear portion of the side surface of said disc lid.

3. An image pickup apparatus according to claim 2, wherein said disc lid has a size corresponding to said disc-like recording medium having a diameter of 8 cm.

4. An image pickup apparatus according to claim 1, wherein said disc lid has a hand strap disposed on the outside thereof, said hand strap is loosened so that said disc lid can be opened in the lateral direction, one end of said hand strap is fixed to the lower portion of the front side of said outer case and the other end of said hand strap is fixed to somewhere of the rear side of said outer case.

5. An image pickup apparatus according to claim 4, wherein said hand strap is composed of a supporting belt of which both ends are fixed to said outer case and a protecting pad attached to said supporting belt, one end of said supporting belt is joined to attachment metal fittings and the other end of said supporting belt is inserted from a through-hole formed in somewhere of the rear side of said outer case and joined to attachment metal fittings fixed to the inside of said outer case.

6. An image pickup apparatus according to claim 1, wherein a front portion of said disc compartment portion of said outer case is projected in the forward direction from said lens apparatus at its front portion opposing the side of said object.

7. An image pickup apparatus according to claim 1, wherein a grip portion for holding said image pickup apparatus with hand is formed by forming a narrow part from the front portion to the upper portion of said disc compartment portion of said outer case which overlaps with said disc lid.

8. An image pickup apparatus according to claim 1, further comprising a lid opening and closing mechanism for locking said disc lid in the state in which said disc compartment portion is closed and which can release said disc lid from being locked, said lid opening and closing mechanism includes a lock claw attached to said disc lid and a stopper claw which can be engaged with and disengaged from said lock claw and which is supported to said outer case so as to become movable and said stopper claw is disposed in a vacant area near said table rotating apparatus within said outer case and said pickup apparatus.

9. An image pickup apparatus according to claim 8, wherein said vacant area is a portion which substantially overlaps with said disc-like recording medium mounted on said turntable and which is formed outside of a mechanical chassis for supporting said table rotating apparatus and said pickup apparatus.

10. An image pickup apparatus according to claim 8, wherein said lid opening and closing mechanism includes a slide member slidably supported to a base plate fixed to said outer case and which has a stopper claw, a rotating lever for locking said slide member and which can release said slide member from being locked by said lock claw, a motor assembly body for moving said slide member to detach said stopper claw from said lock claw and a coil spring for spring-biasing said stopper claw in the direction in which said slide member is locked.

11. An image pickup apparatus according to claim 10, wherein said motor assembly body includes a rotary cam for moving said slide member, a drive motor for rotating said rotary cam and a detection switch for detecting the rotation position of said rotary cam to thereby control driving of said drive motor.

12. An image pickup apparatus according to claim 1, further comprising:
a viewfinder for recognizing an image of said object;
an accessory shoe attached to said outer case and to which an electronic device is detachably attached;
a viewfinder moving mechanism for moving said viewfinder close to or away from said accessory shoe, wherein said viewfinder is detached from said accessory shoe by moving said viewfinder moving mechanism to thereby open an insertion slot of said accessory shoe and said electronic device can be attached to said accessory shoe from said insertion slot.

13. An image pickup apparatus according to claim 12, wherein said accessory shoe has an upper end portion of which height is substantially the same as that of an upper end portion of said viewfinder.

14. An image pickup apparatus according to claim 12, wherein said accessory shoe is located ahead of said viewfinder on the upper surface portion of said outer case.

15. An image pickup apparatus according to claim 12, wherein said viewfinder moving mechanism moves said viewfinder in the forward and backward direction in parallel to the optical axis direction of said lens apparatus.

16. An image pickup apparatus according to claim 12, wherein said viewfinder moving mechanism includes a holder with a guide groove having U-like cross-section in which side surface members thereof are respectively continued to both ends of its central member and which is extended in the direction in which said cross-section shape is continued to said central member and a slider accommodated within said holder and which includes a guide pin engaged with said guide groove so as to become freely slidable, wherein said guide groove and said guide pin are hidden by both surfaces of said central member.

17. An image pickup apparatus according to claim 16, wherein said holder includes an outside holder having said guide groove and which is made of a metal material and an inside holder accommodated within said outside holder and which is made of a synthetic resin and said inside holder hides one surface of said central member.

18. An image pickup apparatus according to claim 16, wherein said holder has an outside cover provided on its outer surface to hide a member for hiding one surface of said central member and a part of a flexible printed circuit board led out from said viewfinder is interposed between said outside cover and said hiding member and thereby led out to the outside.
